# EUROPÄISCHE PATENTSCHRIFT

(11) **EP 0 844 077 B1**
(45) Veröffentlichungstag und Bekanntmachung des Hinweises auf die Patenterteilung: **30.06.2004**
(21) Anmeldenummer: 97119616.7
(22) Anmeldetag: 10.11.1997
(51) Int. Cl.: B32B 27/32, C08L 23/02, H01G 4/18

(54) **Biaxial orientierte Folie aus cycloolefinischen Polymeren, Verfahren zu ihrer Herstellung und ihre Verwendung**
Biaxially oriented film of cycloolefin polymers, process for preparing and its use
Feuille en polymères de cyclooléfines orientée biaxialement, son procédé d'obtention et son utilisation

(30) Priorität: 20.11.1996 DE 19647954
(43) Veröffentlichungstag der Anmeldung: 27.05.1998
(73) Patentinhaber: Ticona GmbH, 65451 Kelsterbach (DE); Mitsui Chemicals, Inc., Tokyo 100-0013 (JP)
(72) Erfinder: Kochem, Karl-Heinz, Dr., 66539 Neunkirchen (DE); Rasp, Wolfgang, Dl., 66424 Homburg (DE); Peiffer, Herbert, Dr., 55126 Mainz (DE); Hatke, Wilfried, Dr., 65719 Hofheim (DE)

(56) Entgegenhaltungen:
- EP-A- 0 291 208
- EP-A- 0 386 896
- EP-A- 0 769 371
- DD-A- 241 971
- US-A- 4 283 453

## Beschreibung

Die Erfindung betrifft eine mehrschichtige Folie aus Cycloolefinpolymeren mit einer Basisschicht und mindestens einer Deckschicht, wobei die Basisschicht im wesentlichen aus Cycloolefinpolymeren COP mit einer Glastemperatur Tg aufgebaut ist und die Deckschicht im wesentlichen aus einer Mischung aus Cycloolefinpolymeren aufgebaut ist. Die Erfindung betrifft weiterhin ein Verfahren zur Herstellung der Folie und ihre Verwendung. Die erfindungsgemäße Folie zeichnet sich durch ein verbessertes Verarbeitungsverhalten und verbesserte elektrische Eigenschaften aus. Sie ist hervorragend für den Einsatz als Kondensatordielektrikum geeignet.

Cycloolefinpolymere sind bekannte Materialien, die sich durch hohe Wärmeformbeständigkeiten, hohe Elastizitätsmodule, geringe Wasseraufnahme und gute dielektrische Eigenschaften auszeichnen. Im Stand der Technik sind ebenfalls Folien aus Cycloolefinpolymeren bekannt.

Die DD-A-224 538 beschreibt die Herstellung von Folien aus Norbornen-Ethylen Copolymeren durch ein Gießfilmverfahren. In den europäischen Anmeldungen EP-A-0 384 694, EP-A-0 610 814, EP-A-0 610 815 und EP-A-0 610 816 wird die Herstellung von Cycloolefinpolymerfolien durch Schmelzextrusion beschrieben. Nach dieser Lehre erfolgt die Verbesserung der mechanischen Eigenschaften durch monoaxiales oder biaxiales Verstrecken der Folien.

Die DD-241 971 und DD-224 538 führen aus, daß sich Folien aus Cycloolefinpolymeren durch niedrige dielektrische Verlustfaktoren (tan δ) auszeichnen. Es ist angegeben, daß der tan δ für COC-Folien bis zu 1,2 · 10⁻⁵ betragen kann. Wie in DD-241 971 weiter ausgeführt wird, sind niedrige Werte für tan δ vor allem für hochfrequente Wechselstromanwendungen der Folien von Interesse, da dann elektrische Verlustleistungen in der Folie und Erwärmung vermieden werden.

In EP-A-0 384 694 wird beschrieben, daß Cycloolefinpolymere zu orientierten Folien mono- und biaxial verstreckt werden können. Die Schrift führt aus, daß die Polymeren vor dem Streckprozeß auf Temperaturen oberhalb des Glaspunktes erhitzt werden müssen. Es ist erwähnt, daß der Folie zur Vermeidung von Verblockung bei der Weiterverarbeitung Additive, wie z. B. Antiblockmittel zugesetzt werden können. Elektrische Eigenschaften der Folien aus Cycloolefinpolymeren werden in dieser Schrift nicht erwähnt.

EP-A-0 610 814, EP-A-0 610 815 und EP-A-0 610 816 betreffen ein- oder mehrschichtige Folien aus Cycloolefincopolymeren (COC) und deren Verwendung als Kondensatordielektrikum. Es ist beschrieben die mono- oder biaxiale Verstreckung in einem Temperaturintervall von 40°C unterhalb bis 50°C oberhalb des Glaspunktes des COCs durchzuführen. Es wird empfohlen, feine inerte Partikel zur Verbesserung der Weiterverarbeitbarkeit, des Schlupf- und Wickelverhaltens in die Folie einzuarbeiten. Als Beispiele für inerte Partikel sind SiO₂, Al₂O₃, Silikate, Carbonate, Sulfide, Polytetrafluorethylen, Talkum, Litiumfluorid und verschiedene Salze von organischen Säuren genannt.

Die bekannten Folien aus Cycloolefinpolymeren sind bezüglich ihrer Weiterverarbeitbarkeit, insbesondere bezüglich des Schlupf- und Wickelverhaltens verbesserungsbedürftig. Darüberhinaus sind hervorragende elektrische Eigenschaften, wie niedriger elektrischer Verlustfaktor und hohe elektrische Durchbruchspannung gefordert. Diese Vorteile dürfen durch die Verbesserung des Schlupf- und Wickelverhaltens nicht beeinträchtigt werden.

Es ist bekannt, daß beim Einsatz der bekannten nicht polymeren organischen und/oder anorganischen Antiblockmittel die Haftung der Partikel in der Cycloolefinpolymermatrix schlecht ist. Darüberhinaus besteht die Gefahr, daß während des Streckprozesses Hohlräume (Vakuolen) gebildet werden. Beide Effekte verschlechtern die elektrischen Eigenschaften der Folie in äußerst unerwünschter Weise.

In den weitaus häufigsten Anwendungsbereichen werden Kondensatorfolien metallisiert. Leider führen die vorstehend genannten Additive häufig zu Problemen bei der Metallisierung der Folienoberfläche. Die Metallschicht haftet auf herausragenden Partikeln schlecht und wird zusätzlich durch Herauslösen der Antiblockmittel fehlerhaft. Schlechte Metallhaftung und Fehlstellen in der Metallschicht sind bei Kondensatorfolien besonders problematisch. Es kommt insbesondere zur Verschlechterung der Verlustfaktoren und die Folie ist für ihre vorgesehene Anwendung nicht mehr einsetzbar.

Die Aufgabe der vorliegenden Erfindung bestand darin, die vorstehend beschriebenen Nachteile der bekannten Folien zu vermeiden. Insbesondere soll eine Cycloolefinpolymerfolie mit niedrigem Schlupf und guten elektrischen Eigenschaften zu Verfügung gestellt werden. Die Folie soll gut zu Verarbeiten sein, eine niedrige Reibung aufweisen und nicht verblocken. Die Verbesserung des Schlupfverhaltens darf aber die Verwendbarkeit der Folie als Kondensatorfolie nicht beeinträchtigen. Sie muß daher insbesondere einen niedrigen elektrischen Verlustfaktor aufweisen.

Die der Erfindung zugrunde liegende Aufgabe wird gelöst durch eine Folie der eingangs genannten Gattung, deren kennzeichnende Merkmale darin bestehen, daß die Mischung aus Cycloolefinpolymeren der Deckschicht mindestens zwei Cycloolefinpolymere COP₁ und COP₂ enthält, deren Glastemperaturen Tg₁ und Tg₂ sich um mindestens 5°C unterscheiden, wobei Tg₂-Tg₁ ≥ 5°C ist und gleichzeitig die Bedingung Tg₂-Tg ≥ 5°C erfüllt ist.

Die Basisschicht der erfindungsgemäßen Folie ist aus Cycloolefinpolymeren bzw. aus Cycloolefinpolymer-Mischungen aufgebaut. Im allgemeinen enthält die Basisschicht mindestens 90 -100 Gew.-% Cycloolefinpolymer bzw. Mischung und gegebenenfalls zusätzlich übliche Additive in jeweils wirksamen Mengen. Vorzugsweise enthält die Basisschicht mindestens 95 - 99 Gew.-%, insbesondere 98 - 99 Gew.-%, Cycloolefinpolymere bzw. Mischung. Die Angaben in Gew.-% beziehen sich auf das Gewicht der Basisschicht.

Cycloolefinpolymere sind im Sinne der vorliegenden Erfindung Homopolymere oder Copolymere, welche polymerisierte Cycloolefineinheiten und gegebenenfalls acyclische Olefine als Comonomer enthalten. Für die vorliegende Erfindung sind Cycloolefinpolymere geeignet die 0,1 bis 100 Gew.-%, bevorzugt 10 bis 99 Gew.-%, insbesondere 50 - 95 Gew.-%, jeweils bezogen auf die Gesamtmasse des Cycloolefinpolymeren, polymerisierte Cycloolefineinheiten enthalten. Bevorzugt sind Polymere die aus cyclischen Olefinen der Formeln I, II, III, IV, V oder VI aufgebaut sind: 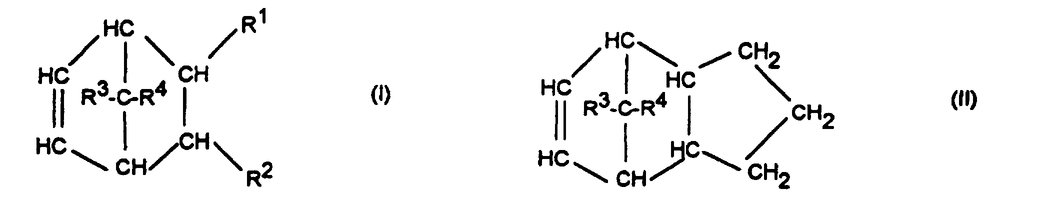 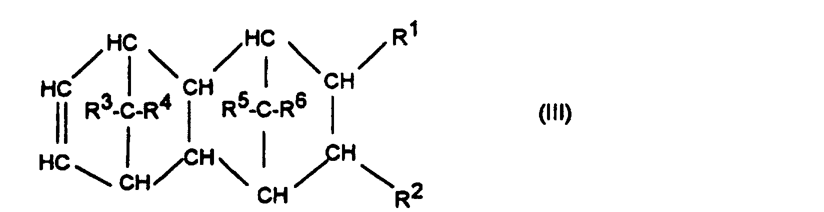 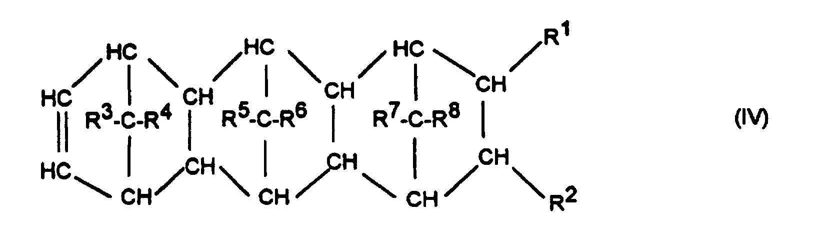 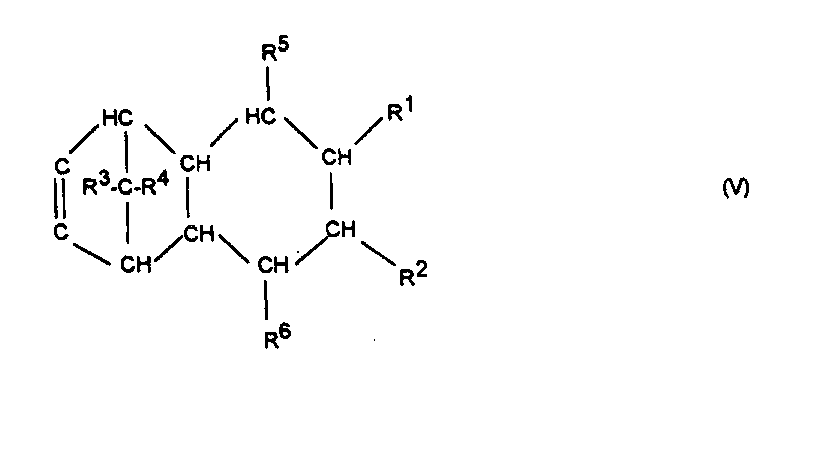 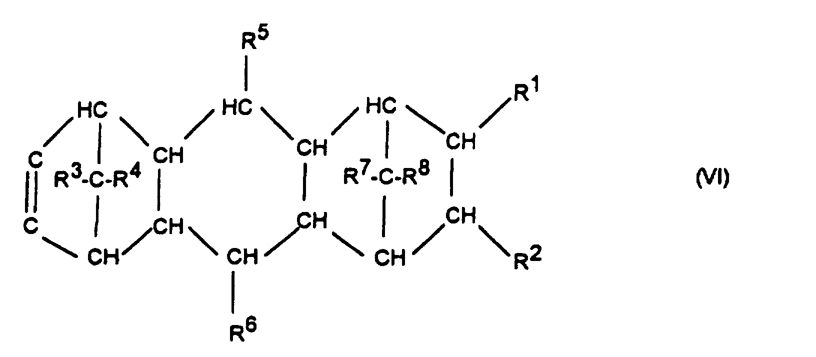 worin R¹, R², R³, R⁴, R⁵, R⁶, R⁷ und R⁸ gleich oder verschieden sind und ein Wasserstoffatom oder einen C₁-C₃₀-Kohlenwasserstoffrest bedeuten oder zwei oder mehrere Reste R¹ bis R⁸ cyclisch verbunden sind, wobei gleiche Reste in den verschiedenen Formeln eine unterschiedliche Bedeutung haben können. C₁-C₃₀-Kohlenwasserstoffreste bedeuten beispielsweise einen linearen oder verzweigten C₁-C₈-Alkylrest, C₆-C₁₈-Arylrest, C₇-C₂₀-Alkylenarylrest oder einen cyclischen C₃-C₂₀-Alkylrest oder acyclischen C₂-C₂₀-Alkylrest.

Gegebenenfalls können die Cycloolefinpolymeren 0 bis 45 Gew.-%, bezogen auf die Gesamtmasse des Cycloolefinpolymers, polymerisierte Einheiten mindestens eines monocyclischen Olefins der Formel VII enthalten: 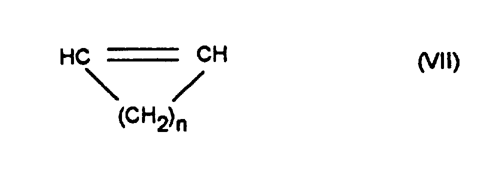 worin n eine Zahl von 2 bis 10 ist,

Gegebenenfalls können die Cycloolefinpolymeren 0 bis 99 Gew.-%, bezogen auf die Gesamtmasse des Cycloolefinpolymers, polymerisierte Einheiten eines acyclischen Olefins der Formel VIII enthalten: 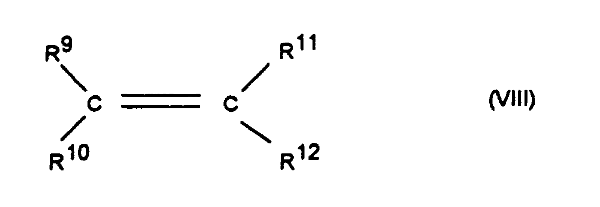 worin R⁹, R¹⁰, R¹¹, R¹² gleich oder verschieden sind und ein Wasserstoffatom oder C₁-C₁₀-Kohlenwasserstoffrest, z.B. einen C₁-C₈-Alkylrest oder C₆-C₁₄-Arylrest bedeuten.

Ebenfalls geeignet sind Cycloolefinpolymere, welche durch ringöffnende Polymerisation mindestens eines der Monomere der Formeln I bis VI und anschließende Hydrierung erhalten werden.

Cycloolefinhomopolymere sind aus einem Monomeren der Formeln I - VI aufgebaut. Für die Zwecke dieser Erfindung sind Cycloolefincopolymerisate bevorzugt, welche mindestens ein Cycloolefin der Formeln I bis VI und acyclische Olefine der Formel VIII als Comonomer enthalten. Dabei sind als acyclische Olefine solche bevorzugt die 2 bis 20 C-Atome aufweisen, insbesondere unverzweigte acyclische Olefine mit 2 bis 10 C-Atomen wie beispielsweise Ethylen, Propylen und/oder Butylen. Der Anteil polymerisierter Einheiten acyclischer Olefine der Formel VIII beträgt bis zu 99 Gew.-%, bevorzugt 5 bis 80 Gew.-%, besonders bevorzugt 10 bis 60 Gew.-%, bezogen auf das Gesamtgewicht des jeweiligen Cycloolefinpolymers.

Unter den vorstehend beschriebenen Cycloolefinpolymeren sind insbesondere diejenigen bevorzugt, die polymerisierte Einheiten polycyclischer Olefine mit Norbornengrundstruktur, besonders bevorzugt Norbornen oder Tetracyclododecen, enthalten. Bevorzugt sind auch Cycloolefincopolymere, die polymerisierte Einheiten acyclischer Olefine, insbesondere Ethylen, enthalten. Besonders bevorzugt sind Norbornen/Ethylen- und Tetracyclododecen/Ethylen-Copolymere welche 5 bis 80 Gew-%, vorzugsweise 10 bis 60 Gew.-% Ethylen enthalten (bezogen auf das Gewicht des Copolymeren).

Die vorstehend beschriebenen Cycloolefinpolymeren weisen im allgemeinen Glastemperaturen T_{g} zwischen -20°C und 400°C, bevorzugt zwischen 50°C und 200°C auf. Die Viskositätszahl (Dekalin, 135°C, DIN 53728) liegt im allgemeinen zwischen 0,1 und 200 ml/g, bevorzugt zwischen 50 und 150 ml/g.

Die Herstellung der Cycloolefinpolymere geschieht durch eine heterogene oder homogene Katalyse mit metallorganischen Verbindungen und ist in einer Vielzahl von Dokumenten beschrieben. Geeignete Katalysatorsysteme basierend auf Mischkatalysatoren aus Titan- bzw. Vanadiumverbindungen in Verbindung mit Aluminiumorganylen werden in DD 109 224, DD 237 070 und EP-A 0 156 464 beschrieben. EP-A-0 283 164, EP-A-0 407 870, EP-A- 485 893 und EP-A-0 503 422 beschreiben die Herstellung von Cycloolefinpolymeren mit Katalysatoren basierend auf löslichen Metallocenkomplexen. Auf die in diesen Schriften beschriebenen Herstellverfahren von Cycloolefinpolymeren wird hiermit ausdrücklich Bezug genommen.

Die erfindungsgemäße Folie weist neben der vorstehend beschriebenen Basisschicht mindesten eine, vorzugsweise beidseitig, Deckschicht/en auf. Diese Deckschicht/en ist/sind im wesentlichen auch aus den vorstehend für die Basisschicht beschriebenen Cycloolefinpolymeren aufgebaut. Es ist erfindungswesentlich, daß die Deckschicht mindestens zwei verschiedene der vorstehend für die Basisschicht beschriebenen Cycloolefinpolymere COP₁ und COP₂ enthält, welche sich in ihrem Glaspunkt unterscheiden. Die Differenz der Glaspunkte Tg₁ und Tg₂ beträgt mindestens 5°C, bevorzugt mindestens 10 -150°C, insbesondere 20 - 100°C, wobei Tg₂ >Tg₁ ist.

Weiterhin ist es vorteilhaft, daß der höhere Glaspunkt Tg₂ des COP₂ auch über dem Glaspunkt Tg des Cyclololefinpolymeren der Basisschicht liegt. Hierbei ist eine Differenz von mindestens 5°C, bevorzugt mindestens 10 bis 150°C, insbesondere 20 bis 100°C bevorzugt, wobei Tg₂ > Tg gilt.

Überraschenderweise wurde gefunden, daß durch den Zusatz eines Cycloolefinpolymeren COP₂ mit erhöhtem Glaspunkt Tg₂ in der (den) äußeren Deckschicht(en) eine rauhe Oberfläche beim Verstrecken der Folie erzeugt wird. Je nach Art und Menge des Cycloolefinpolymeren COP₂ mit erhöhtem Glaspunkt kann die Oberflächenrauheit der Folie exakt eingestellt und den jeweiligen Anforderungen angepaßt werden. Durch diese Maßnahme ist es möglich auf gängige partikelförmige Antiblockmittel zu verzichten. Im Ergebnis ist die erfindungsgemäße Folie besser zu metallisieren und besser zu verarbeiten als vergleichbare Folien mit partikelförmigen Antiblockmitteln. Es wurde gefunden, daß das zugesetzte COP₂ keine separierten Partikel in der Deckschicht bildet, aber überraschenderweise dennoch zu einer aufgerauhten Folienoberfläche führt. Dabei zeichnet sich die aufgerauhte Oberfläche der erfindungsgemäßen Folie durch eine besonders gleichmäßige rauhe Oberflächenstruktur aus, die nicht erwartet wurde.

Darüber hinaus ergeben sich weitaus geringere dielektrische Verlustfaktoren im \/ergleich zu Folien aus Cycloolefinpolymeren mit üblichen partikelförmigen Antiblockmitteln.

Im allgemeinen enthält die Deckschicht insgesamt mindestens 90 bis 100 Gew.-% der vorstehend beschriebenen Cycloolefinpolymeren COP₂ und COP₁, vorzugsweise 95 bis 99 Gew.-%, insbesondere 98 bis 99 Gew.-%, jeweils bezogen auf das Gewicht der Deckschicht. Diese Angaben beziehen sich auf den Gesamtgehalt an Cycloolefinpolymer (COP₂ und COP₁). Gegebenenfalls kann die Deckschicht zusätzlich übliche Additive in jeweils wirksamen Mengen enthalten.

Die Deckschicht enthält im allgemeinen 0,5 bis 25 Gew.-%, bevorzugt 2 bis 15 Gew.-%, insbesondere 5 bis 10 Gew.-%, jeweils bezogen auf das Gewicht der Deckschicht, des Cycloolefinpolymeren COP₂ mit erhöhtem Glaspunkt Tg₂. Der Anteil des Cycloolefinpolymeren COP₁ mit der Tg₁ beträgt maximal 99,5 bis 75 Gew.-%, vorzugsweise 98 bis 85 Gew.- %, insbesondere 95 bis 90 Gew.-%, jeweils bezogen auf das Gewicht der Deckschicht.

Die Deckschichtmischung aus COP₁ und COP₂ kann nach den üblichen bekannten Verfahren hergestellt werden, wie beispielsweise durch mechanisches Vermischen von Pulver oder Granulat oder durch Extrusionsvermischung und anschließender Granulierung.

Wie vorstehend erwähnt können die einzelnen Schichten der Folie neben den Cycloolefinpolymeren zusätzlich geeignete Additve in jeweils wirksamen Mengen enthalten. Prinzipiell sind alle Additive geeignet, welche üblicherweise in Polyolefinfolien wie Polyethylen- oder Polypropylenfolien verwendet werden. Auf die bekannten üblichen Antiblockmittel kann auf grund der erfindungsgemäßen Deckschichtzusammensetzung verzichtet werden. Auf den Zusatz von Gleitmitteln und Antistatika, der bei der Verwendung als Verpackungsfolie üblich ist, sollte bei Kondensatoranwendungen verzichtet werden, da diese Additive die elektrischen Eigenschaften verschlechtern. Daher sind für Kondensatorfolien Stabilisatoren, Neutralisationsmittel und Antioxidantien bevorzugt.

Neutralisationsmittel sind vorzugsweise Dihydrotalcit, Calciumstearat und/oder Calciumcarbonat einer mittleren Teilchengröße von höchstens 0,7 µm, einer absoluten Teilchengröße von kleiner 10 µm und einer spezifischen Oberfläche von mindestens 40 m²/g. Im allgemeinen wird das Neutralisationsmittel in einer Menge von 0,02 bis 0,1 Gew.-% zugesetzt.

Als UV-Stabilisatoren können beispielsweise Absorber wie Hydroxyphenylbenzotriazole, Hydroxybenzophenone, Formamidin oder Benzyliden-Campher, Quencher wie Zimtsäureester oder Nickel-Chelate, Radikalfänger wie sterisch gehinderte Phenole, Hydroperoxidzersetzer wie Nickel- oder Zink-Komplexe schwefelhaltiger Verbindungen oder Lichtstabilisatoren vom HALS-Typ sowie deren Gemische eingesetzt werden.

Als Stabilisatoren können die üblichen stabilisierend wirkenden Verbindungen für Ethylen-, Propylen- und andere -Olefinpolymere eingesetzt werden. Deren Zusatzmenge liegt zwischen 0,05 und 2 Gew.-%. Besonders geeignet sind phenolische Stabilisatoren, Alkali-/Erdalkalistearate und/oder Alkali-/Erdalkalicarbonate. Phenolische Stabilisatoren werden in einer Menge von 0,1 bis 0,6 Gew.-%, insbesondere 0,15 bis 0,4 Gew.-%, und mit einer Molmasse von mehr als 500 g/mol bevorzugt. Pentaerythrityl-Tetrakis-3-(3,5-di-Tertiärbutyl-4-Hydroxyphenyl)-Propionat oder 1,3,5-Trimethyl-2,4,6-tris(3,5-di-Tertiärbutyl-4-Hydroxybenzyl)benzol sind besonders vorteilhaft.

Als Antioxidantien können beispielsweise zugesetzt werden Radikalfänger wie substituierte Phenole und aromatische Amine und/oder Peroxidzersetzer wie Phosphite, Phosphate und Thioverbindungen.

Die Gesamtdicke der erfindungsgemäßen Folie beträgt im allgemeinen 2 bis 50 µm, vorzugsweise 3 bis 30 µm. Die Basisschicht ist diejenige Schicht welche mindestens 50 % der Gesamtfoliendicke ausmacht. Die Dicke der äußeren Deckschicht(en) beträgt bzw. betragen 0,1 bis 5 µm, vorzugsweise 0,5 bis 3 µm, insbesondere 0,5 bis 1 µm. Bevorzugte Ausführungsformen weisen beidseitig Deckschichten auf, welche gleich oder verschieden aufgebaut sein können. Dreischichtige Folien mit gleichen Deckschichten, d.h. mit einem symmetrischen Aufbau sind bevorzugt.

Die Erfindung betrifft weiterhin ein Verfahren zur Herstellung der erfindungsgemäßen Mehrschichtfolie. Die Herstellung erfolgt bevorzugt in der üblichen dem Fachmann bekannten Weise durch Extrusion nach dem an sich bekannten Coextrusionsverfahren.

Im Rahmen dieses Verfahrens wird wie beim Coextrusionsverfahren üblich das Polymere bzw. die Polymermischung der einzelnen Schichten in einem Extruder komprimiert, aufgeschmolzen und verflüssigt, wobei die gegebenenfalls zugesetzten Additive bereits im Polymer bzw. in der Polymermischung enthalten sein können oder via Masterbatch-Technik zugegeben werden. Die Polymermischung für die Deckschicht wird bevorzugt in einem separaten Arbeitsschritt hergestellt. Gegebenenfalls können die Komponenten für die Deckschichten auch im Extruder vermischt werden. Die den einzelnen Schichten der Folie entsprechenden Schmelzen werden dann gemeinsam und gleichzeitig durch eine Flachdüse (Breitschlitzdüse) coextrudiert, und die ausgepreßte mehrschichtige Folie wird auf einer oder mehreren Abzugswalzen abgezogen, wobei sie abkühlt und sich verfestigt. Die Abzugswalzentemperatur liegt im Bereich von 20 bis 180°C, vorzugsweise zwischen 60 und 130°C. Die so erhaltene Folie wird dann längs und quer zur Extrusionsrichtung gestreckt, was zu einer Orientierung der Molekülketten führt. In Längsrichtung wird vorzugsweise mit einem Streckverhältnis von 1.1:1 bis 4:1 und in Querrichtung vorzugsweise mit 2:1 bis 5:1 gestreckt. Das Längsstrecken wird man zweckmäßigerweise mit Hilfe zweier entsprechend dem angestrebten Streckverhältnis verschieden schnellaufender Walzen durchführen und das Querstrecken mit Hilfe eines entsprechenden Kluppenrahmens. Grundsätzlich sind jedoch auch andere bekannte Strecktechnologien zur Orientierung der Folie möglich.

An die biaxiale Verstreckung schließt sich überlicherweise eine Thermofixierung (Wärmebehandlung) an, abschließend wird die Folie aufgewickelt. Zur Erhöhung der Oberflächenspannung kann (können) gegebenenfalls nach der biaxialen Verstreckung eine oder beide Oberfläche(n) der Folie nach einer der bekannten Methoden corona- oder flammbehandelt werden.

Die Temperaturen, bei denen die Folie in Längs- und/oder Querrichtung verstreckt wird, sind dabei den jeweils eingesetzten Cycloolefinpolymertypen insbesondere deren Glaspunkten anzupassen. Dabei muß sich sowohl die Längsstrecktemperatur Tₗ als auch die Questrecktemperatur T_{q} nach der Zusammensetzung der Basischicht als auch nach der Tg₁ des COP₁ und Tg₂ des COP₂ der Deckschicht richten.

Sowohl T₁ als auch T_{q} müssen mindestens 5°C, vorzugsweise 10 bis 150°C über der Tg des COP der Basisschicht und der Tg₁ des COP₁ der Deckschicht liegen. Im Falle von COP-Mischungen in der Basisschicht muß soweit erwärmt werden, daß die Polymermischung der Basisschicht verstreckbar ist. Die Strecktemperaturen richten sich dann im allgemeinen nach der Hauptkomponente mit der höchten Tg in der Basisschicht.

Um die erforderliche Oberflächenrauheit der Folie zu erzielen, sollten die Strecktemperaturen Tₗ und T_{q} zusätzlich auf den Glaspunkt des eingesetzten COP₂ in der Deckschicht abgestimmt werden. Die Strecktemperaturen des zuerst durchgeführten Streckprozesses (also üblicherweise Tₗ) sollten mindestens 3°C vorzugsweise mindestens 5°C, unterhalb des Glaspunkts Tg₂ des COP₂ liegen. Die T_{q} kann im Prinzip unabhängig von Tg₂ gewählt werden, so daß T_{q} über oder unter Tg₂ liegen kann. Gleichzeitig ist aber zu berücksichtigen, daß dabei die Strecktemperaturen wie vorstehend erläutert oberhalb der Glaspunkte Tg und Tg₁ der übrigen Cycloolefinpolymere liegen sollte. Diese Bedingungen sind einzuhalten, um bei einer guten Verstreckbarkeit der Folie die gewünschte Oberflächenrauhigkeit ohne zusätzliche Antiblockmittel zu erzielen.

Durch die Zumischung des Cycloolefinpolymeren COP₂ in der (den) Deckschicht(en) mit einem erhöhten Glaspunkt Tg₂ kommt es vermutlich beim Verstreckprozeß zu einem Aufreißen der Oberflächenschichten und dadurch zu einer aufgerauhten Oberfläche ohne Ausbildung von separierten Partikeln aus COP₂. Überraschenderweise kann bei der vorliegenden Erfindung die Oberflächenrauheit in breiten Grenzen durch Art und Menge der eingesetzten Cycloolefinpolymeren in der (den) Deckschicht(en) eingestellt werden; dadurch werden gute Gleitreibungswerte und im Vergleich zum Einsatz üblicher Antiblockmittel verbesserte dielektrische Verlustfaktoren erzielt.

Die erfindungsgemäße Folie kann mittels üblicher dem Fachmann bekannten Verfahren metallisiert werden. Die bei der Metallisierung auf mindestens eine Oberflächenschicht der Folie aufgebrachte Metallschicht kann aus jedem geeigneten Metall bestehen. Bevorzugt sind Schichten aus Aluminium, Zink, Gold oder Silber oder aus entsprechenden Legierungen, wobei Aluminium oder aluminiumhaltige Legierungen besonders bevorzugt sind. Als geeignete Metallisierungsverfahren seien die Elektroplattierung, das Besputtem und die Vakuumbedampfung genannt, wobei die Vakuumbedampfung bevorzugt ist. Die Dicke der Metallschicht beträgt etwa 20 bis 600 nm, vorzugsweise 25 bis 100 nm.

Gegebenenfalls wird die Folie vor der Metallisierung mittles Flamme oder Corona Oberflächenbehandelt. Die erfindungsgemäße Mehrschichtfolie kann aber auch ohne vorherige Maßnahme zur Erhöhung der Oberflächenenergie mit einer Metallschicht versehen werden. Der Vorteil dieser Ausführungsform ist darin zu sehen, daß die Cycloolefinpolymerfolie nicht nur einseitig sondern auch beidseitig metallisiert werden kann. Aus den metallisierten Cycloolefinpolymerfolien lassen sich nach üblichen Verfahren Kondensatoren herstellen.

Die Erfindung wird nun anhand von Ausführungsbeispielen näher erläutert.

### Beispiel 1 (Herstellung von COP₁ bzw. COP mit Tg: 140°C)

Ein 1,5-dm³ Kolben wurde mit 1 Liter Benzinfraktion (Siedebereich: 90 bis 110°C) und 20 ml toluolische Methylaluminoxanlösung (10,1 Gew.-% Methylaluminoxan der Molmasse 1300 g/mol nach kryoskopischer Bestimmung) befüllt und bei 70°C ca. 30 min gerührt, um eventuell vorhandene Verunreinigungen zu entfernen. Nach Ablassen der Lösung wurde der Reaktor mit 480 cm³ einer 85 gewichtsprozentigen Lösung von Norbornen in Toluol gefüllt. Durch mehrfaches Aufdrücken von Ethylen (6 bar G) wurde die Lösung mit Ethylen gesättigt und anschließend 10 cm³ der toluolischen Methylaluminoxanlösung in den Reaktor gegeben und 5 Minuten bei 70°C gerührt. Eine Lösung von 5,43 mg Isopropylen-(1-cyclopentadienly)(1-indenyl)zirkondichlorid in 10 cm³ toluolischer Methylaminoxanlösung wurde nach 15 minütiger Voraktivierung zugegeben. Unter Rühren (750 UPM) wurde 30 Minuten bei 70°C polymerisiert, wobei der Ethylendruck durch Nachdosieren bei 18 bar G gehalten wurde. Die homogene Reaktionslösung wurde in ein Gefäß abgelassen und mit ca. 1 ml Wasser versetzt. Anschließend wird die Lösung mit einem Filterhilfsmittel versetzt und über eine Drucknutsche filtriert. Diese Lösung wird schnell in 5 dm³ Aceton eingegossen, 10 min gerührt und filtriert. Der erhaltene Feststoff wurde mit Aceton gewaschen. Das erneut filtrierte Polymer wurde bei 80°C und einem Druck von 0,2 bar 15 Stunden getrocknet.

Es wurden 89,1 g eines farblosen Polymers erhalten. Zur Bestimmung der Viskositätszahl wurden 0,1 g des Polymeren in 100 ml Dekalin gelöst. Die Lösung wurde in einem Kappillarviskosimeter bei 135°C vermessen. Die Viskositätszahl betrug 56,5 dl/g. Die Glastemperatur wurde mit einem DSC7 der Firma Perkin Elmer bestimmt. Die Glastemperatur wurde bei einer Heizrate von 20°C/min aus der 2. Heizkurve ermittelt und betrug 140°C. Der Gehalt an Ethylen wurde mittels ¹³C-Kernresonanzspektroskopie zu 49 Mol-% ermittelt. Das Molekulargewicht des Polymeren wurde mittels Gelpermeationschromatographie bei 135°C in ortho-Dichlorbenzol ermittelt. Als Standard wurden Polyethylenfraktionen verwendet. Für das Polymer wurden folgende Werte gefunden:
Mₙ: 21500 g/mol; M_{w}: 45000 g/mol; M_{w}/Mₙ: 2,1.

### Beispiel 2 (Herstellung von COP₂ mit Tg: 165°C)

Die Herstellung des Polymeren erfolgte nach dem in Beispiel 1 beschriebenen Verfahren. Es wurde ein Ethylendruck von 5 barG eingestellt und 4,78 mg Isopropylen-(9-fluorenyl)-cyclopentadienyl-zirkondichlorid als Katalysator verwendet. Nach Isolierung des Polymeren wurden folgende Mengen und Eigenschaften gefunden:
Ausbeute: 56 g; Lösungsviskosität: 81 ml/g; Glasstufe: 163°C, Ethylengehalt: 45 Molprozent; Molekulargewicht: Mₙ: 43.900 g/mol, M_{w}: 83.800 g/mol;
M_{w}/Mₙ: 1,9

### Beispiel 3 (Herstellung einer Mischung aus COP₁ und COP₂)

In einem Doppelschneckenextruder wurde bei einer Schmelztemperatur von 240°C eine Mischung aus 16 kg COP₁ und 4 kg COP₂ extrudiert und der erstarrte Schmelzestrang anschließend granuliert. Es wurden 19,2 kg eines farblosen, trüben Granulats erhalten. Die Untersuchung mittels DSC ergab eine Glasstufe bei 139°C (Tg₁) und eine weitere, weniger stark ausgeprägte Glasstufe bei 164°C (Tg₂).

### Beispiel 4 (Herstellung einer Mischung aus COP₁ und Syloblock 44)

In einem Doppelschneckenextruder wurde bei einer Schmelztemperatur von 240°C eine Mischung aus 16 kg COP₁ und 4 kg Syloblock 44 (Firma W.R. Grace) extrudiert und der erstarrte Schmelzestrang anschließend granuliert. Es wurden 19,3 kg eines farblosen, trüben Granulat erhalten. Die Untersuchung mittels DSC ergab eine Glasstufe bei 139°C (Tg₁).

### Beispiel 5, 6, 7

Durch Coextrusion und anschließende stufenweise Verstreckung in Längs- und Querrichtung wurde eine dreischichtige Folie mit einem ABA-Schichtaufbau hergestellt, d.h. die Basisschicht B ist von zwei gleichen Deckschichten A umgeben.

Die Basisschicht B bestand im wesentlichen aus dem COP₁, wie in Beispiel 1 beschrieben, und enthielt 0,2 Gew.-% eines phenolischen Stabilisators. Die beiden Deckschichten bestanden im wesentlichen aus je 98 Gew.-% des COP₁ aus Beispiel 1 und 2 Gew.-% des COP₂ aus Beispiel 2 (bezogen auf das Gesamtgewicht der Cycloolefincopolymeren in der jeweiligen Deckschicht) sowie 0,2 Gew.-% eines phenolischen Stabilisators (bezogen auf das Gesamtgewicht der Deckschicht).

Die einzelnen Schichten der Folie wurden bei einer Extrudertemperatur von 230°C und einer Düsentemperatur von 240°C gemeinsam durch eine Breitschlitzdüse extrudiert. Die austretenden Schmelzeströme wurden auf einer 90°C heißen Abzugswalze abgezogen und anschließend bei Temperaturen von 150 bis 160°C in Längsrichtung (Längstreckverhältnis: 2,0) und danach bei Temperaturen von 170°C bis 175°C in Querrichtung (Querstreckverhältnis: 3,2) verstreckt und anschließend aufgerollt.

Die an den so hergestellten Folien gemessenen Eigenschaften sind in Tabelle 1 aufgeführt. Die Folien zeigten ein ausgezeichnetes Aufwickelverhalten ohne Blockneigung.

### Vergleichsbeispiel 8 und 9

Durch Coextrusion und anschließende stufenweise Verstreckung in Längs- und Querrichtung wurde eine dreischichtige Folie mit einem ABA-Schichtaufbau hergestellt, d.h. die Basisschicht B ist von zwei gleichen Deckschichten A umgeben.

Die Basisschicht B bestand im wesentlichen aus dem COP₁, wie in Beispiel 1 beschrieben, und enthielt 0,2 Gew.-% eines phenolischen Stabilisators. Die beiden Deckschichten bestanden im wesentlichen ebenfalls aus dem COP₁ des Beispiels 1 sowie 0,2 Gew.-% eines phenolischen Stabilisators.

Basis- und Deckschichten wurden wie in Beispiel 5-7 beschrieben bei einer Extrudertemperatur von 230°C und einer Düsentemperatur von 240°C zunächst auf eine 90°C heiße Abzugswalze extrudiert und anschließend bei Temperaturen von 150 bis 160°C in Längsrichtung (Längstreckverhältnis: 2,0) und danach bei Temperaturen von 170°C bis 175°C in Querrichtung (Querstreckverhältnis: 3,2) verstreckt und anschließend aufgerollt.

Die so hergestellten Folien hatten Eigenschaften wie in Tabelle 1 aufgeführt. Die Folien wiesen eine hohe Reibung gegeneinander auf und ließen sich deshalb nicht faltenfrei aufwickeln.

### Vergleichsbeispiel 10 und 11 (Herstellung einer biaxial orientierten Folie aus COP₁ und Syloblock 44 als Additiv in der Deckschicht)

Durch Coextrusion und anschließende stufenweise Verstreckung in Längs- und Querrichtung wurde eine dreischichtige Folie mit einem ABA-Schichtaufbau hergestellt, d.h. die Basisschicht B ist von zwei gleichen Deckschichten umgeben.

Die Basisschicht B bestand im wesentlichen aus dem COP₁, das in Beispiel 1 beschrieben ist, und enthielt 0,2 Gew.-% eines phenolischen Stabilisators. Die beiden Deckschichten bestanden im wesentlichen aus je 99,6 Gew.-% des COP₁ aus Beispiel 1 und 0,4 Gew.-% Syloblock 44 (bezogen auf das Gesamtgewicht des Cycloolefincopolymeren COP₁ in der jeweiligen Deckschicht) sowie 0,2 Gew.-% eines phenolischen Stabilisators bezogen auf das Gesamtgewicht der Deckschicht.

Basis- und Deckschichten wurden bei einer Extrudertemperatur von 230°C und einer Düsentemperatur von 240°C zunächst auf eine 90°C heiße Abzugswalze extrudiert und anschließend bei Temperaturen von 150 bis 160°C in Längsrichtung (Längstreckverhältnis: 2,0) und danach bei Temperatur von 170°C bis 175°C in Querrichtung (Querstreckverhältnis: 3,2) verstreckt und anschließend aufgerollt. Die so hergestellten Folien hatten Eigenschaften wie in Tabelle 1 aufgeführt.

### Vergleichsbeispiel 12

Es wurde eine Folie hergestellt wie in Vergleichsbeispiel 10 und 11 beschrieben. Nur die Konzentration des Sylobloc 44 in der Deckschicht wurde auf 0,15 Gew.-% (bezogen auf das Gesamtgewicht der Cycloolefincopolymeren (COP₁ und COP₂) gesenkt. Die Foliendicke betrug 6 µm. Die Zusammensetzung der Folie und die Verfahrensbedingungen entsprachen denjenigen aus VB 10 und 11.

Die erfindungsgemäßen Folien (B5-B7) zeichnen sich durch einen niedrigen Gleitreibungskoeffizienten aus, welcher deutlich unter den mit Sylobloc 44 erzielbaren Werten liegt. Gleichzeitig zeigen die B 5-B7 deutlich niedrigere Verlustfaktoren gegenüber den Sylobloc-haltigen Folien. Vergleichbar niedrige Verlustwerte sind nach den Versuchsbeispielen 8-9 nur für COC-Folien erzielbar, welche frei von Antiblockmitteln sind. Diese Folien sind jedoch durch ihre starke Blockneigung und die hohen Gleitreibungswerte praktisch nicht verwendbar. Sie lassen sich nicht faltenfrei aufwickeln, verblocken beim Abwickeln und bei der gesamten weiteren Verarbeitung.

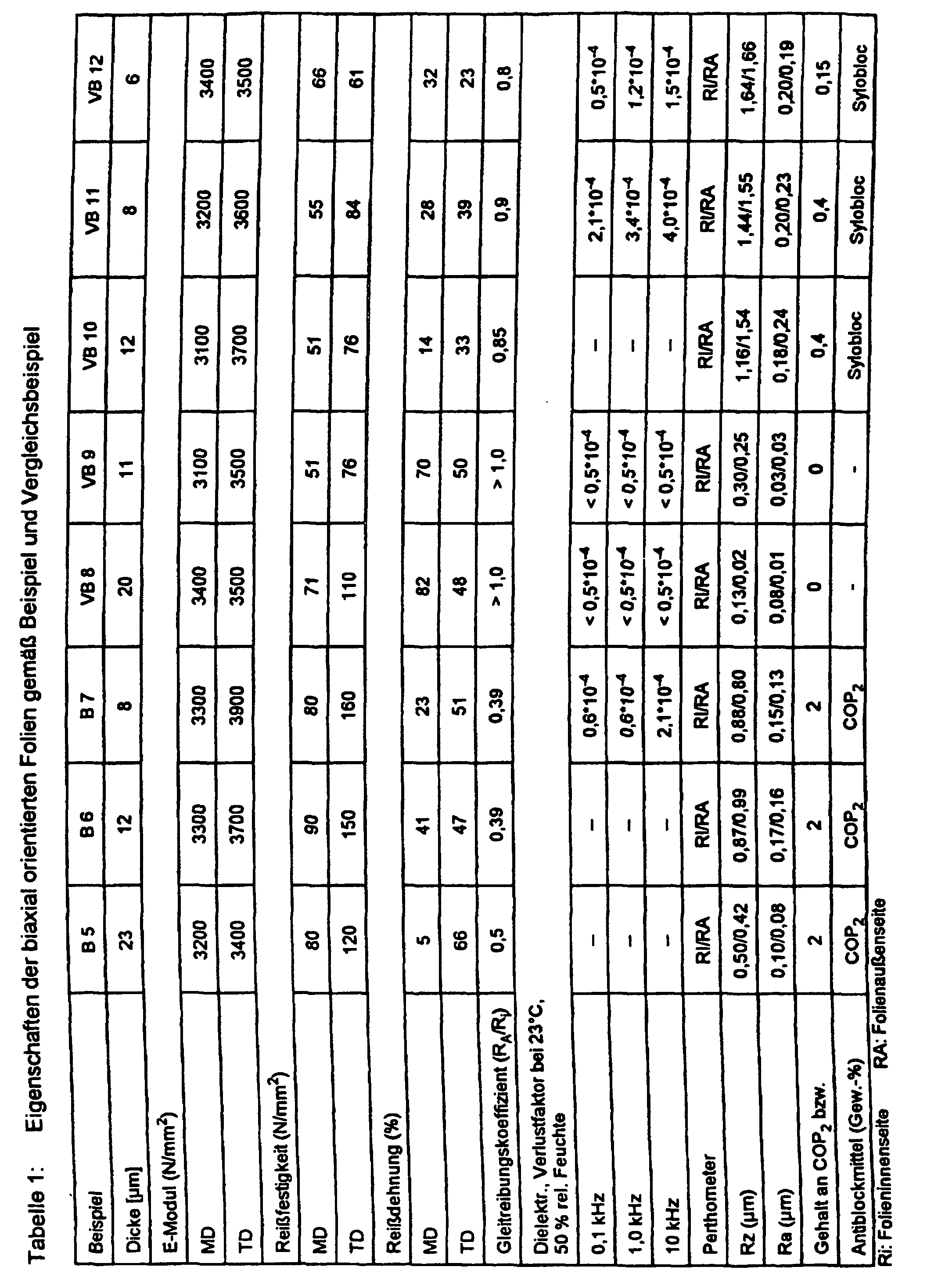

Zur Charakterisierung der Rohstoffe und Folien wurden die folgenden Meßmethoden benutzt:

### Viskositätszahl J

Die Viskositätszahl ist ein Maß für die Molmasse. Die Viskositätszahl wird nach DIN 53 728, Teil 4, in 0,1 %iger Dekahydronaphthalin-Lösung bei 135°C gemessen.

### Glaspunkt

Die Glastemperaturen wurden nach Dln 53 765 bei 20°K/min aus der 2 Heizkurve bestimmt.

### Ethylengehalt

Der Ethylengehalt der COP wurde durch ¹³C-NMR bestimmt.

### Molekulargewichtsbestimmung (Mw und Mz)

Die Molekulargewichte der Proben wurden mit der Gelpermeationschromatographie mit Polyethylen als Standard bestimmt. Als Leitungsmittel wurde o-Dichlorbenzol bei einer Temperatur von 135°C benutzt. Es wurde ein Waters 150-C ALC/GPC mit einem Jerdi-Säulennetz (500 x 10 mm linear) und einem RI-64 als Katether verwendet.

### Gleitreibung

Die Gleitreibung wurde in Anlehnung an DIN 53375 bestimmt und für die Folien außen - gegen die Folieninnenseite gemessen. Die Gleitreibungszahl wurde ca. 14 Tage nach Herstellung der Folie bestimmt (bei 23°C und 50 % rel. Luftfeuchte).

### Rauhigkeit

Die Rauhigkeit wurde nach DIN 4768 bei einem cut-off von 0,25 mm bzw. 0,08 mm bestimmt.

### Reißfestigkeit, Reißdehnung

Die Reißfestigkeit und die Reißdehnung werden nach DIN 53455 bestimmt.

### E-Modul

Der E-Modul wird gemäß DIN 53 457 bzw. ASTM 882 bestimmt.

### Verlustfaktor

Bestimmt nach DIN 53483 bei 23°C und 50 % rel. Luftfeuchte bei einer Meßspannung von 1 Volt und aufgedampften Silberelektroden (20 cm², 150 nm Schichtdicke).

## Patentansprüche

1. Mehrschichtige Folie aus Cycloolefinpolymer mit einer Basisschicht und mindestens einer Deckschicht, wobei die Basisschicht im wesentlichen aus einem Cycloolefinpolymeren COP mit einer Glastemperatur Tg aufgebaut ist und die Deckschicht im wesentlichen aus einer Mischung aus Cycloolefinpolymeren aufgebaut ist, **dadurch gekennzeichnet, daß** die Mischung aus Cycloolefinpolymeren mindestens zwei Cycloolefinpolymere COP₁ und COP₂ enthält, deren Glastemperaturen Tg₁ und Tg₂ sich um mindestens 5°C unterscheiden, wobei Tg₂-Tg₁ ≥ 5°Cund gleichzeitig die Bedingung Tg₂-Tg ≥ 5°C erfüllt ist.

2. Folie nach Anspruch 1 **dadurch gekennzeichnet, daß** die Basisschicht mindestens 90-100 Gew.-% Cycloolefinpolymer oder eine Cycloolefinpolymermischung und gegebenenfalls zusätzlich übliche Additive enthält.

3. Folie nach einem oder mehreren der Ansprüche 1 bis 2, **dadurch gekennzeichnet, daß** das Cycloolefinpolymere der Basisschicht 0,1 bis 100 Gew.-%, bevorzugt 10 bis 99 Gew.-%, jeweils bezogen auf die Gesamtmasse des Cycloolefinpolymeren, polymerisierte Cycloolefineinheiten der Formeln I, II, III, IV, V oder VI enthält 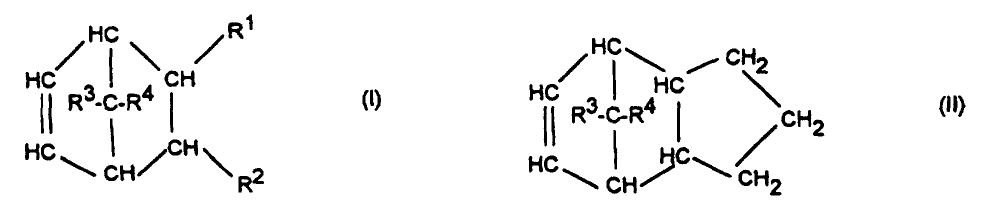 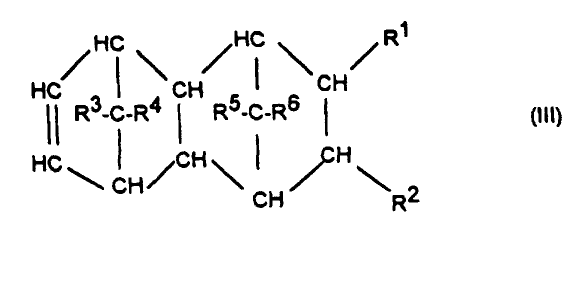 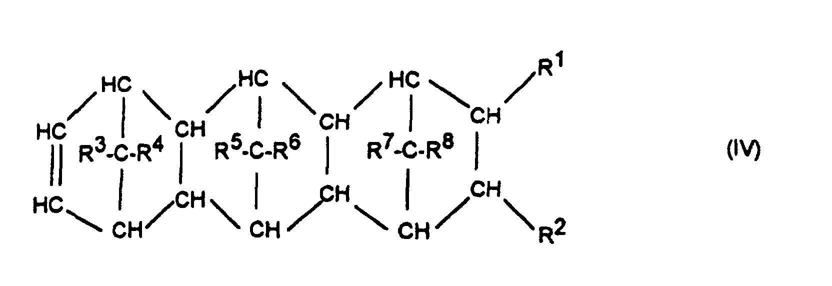 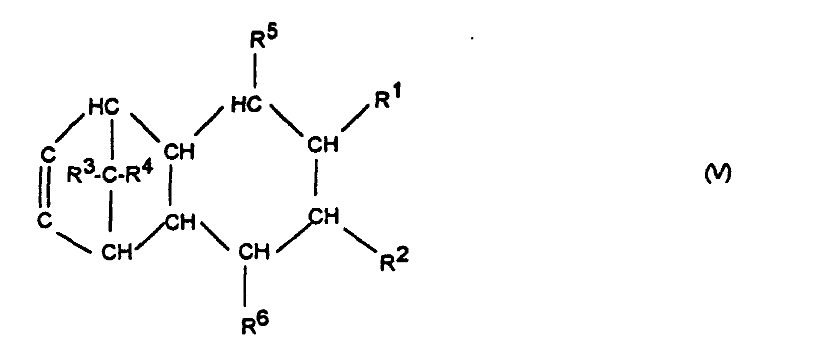 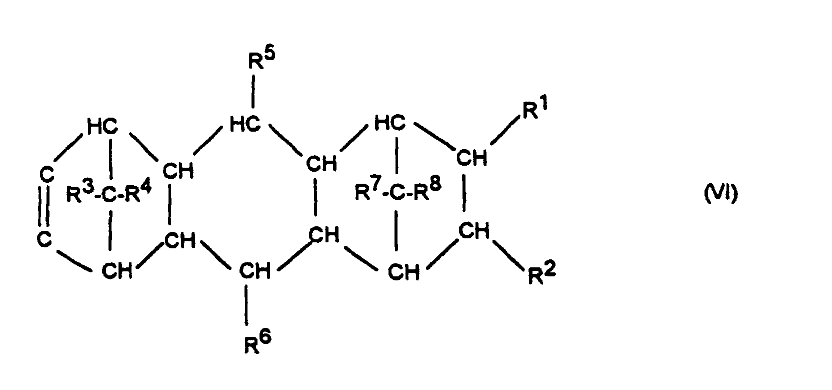 worin R¹, R², R³, R⁴, R⁵, R⁶, R⁷ und R⁸ gleich oder verschieden sind und ein Wasserstoffatom oder einen C₁-C₃₀-Kohlenwasserstoffrest bedeuten oder zwei oder mehrere Reste R¹ bis R⁸ cyclisch verbunden sind, wobei gleiche Reste in den verschiedenen Formeln eine unterschiedliche Bedeutung haben können.

4. Folie nach Anspruch 3, **dadurch gekennzeichnet, daß** das Cycloolefinpolymere der Basisschicht ein Cycloolefincopolymer ist und bis zu 45 Gew.-%, bezogen auf die Gesamtmasse des Cycloolefincopolymers, polymerisierte Einheiten mindestens eines monocyclischen Olefins der Formel VII enthält: 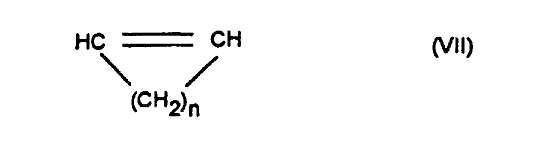 worin n eine Zahl von 2 bis 10 ist,

5. Folie nach Anspruch 3, **dadurch gekennzeichnet, daß** das Cycloolefinpolymere der Basisschicht ein Cycloolefincopolymer ist und bis zu 99 Gew.-%, bezogen auf die Gesamtmasse des Cycloolefincopolymers, polymerisierte Einheiten eines acyclischen Olefins der Formel VIII enthält: 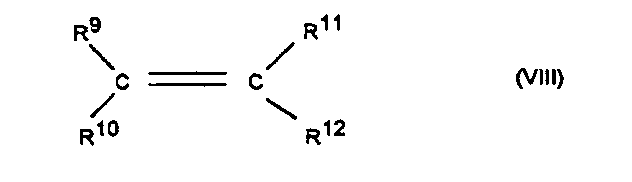 worin R⁹, R¹⁰, R¹¹, R¹² gleich oder verschieden sind und ein Wasserstoffatom oder C₁-C₁₀-Kohlenwasserstoffrest, vorzugsweise einen C₁-C₈-Alkylrest oder C₆-C₁₄-Arylrest bedeuten.

6. Folie nach einem oder mehreren der Ansprüche 1 bis 5, **dadurch gekennzeichnet, daß** das Cycloolefinpolymere der Basisschicht ein Norbornen/Ethylen-Copolymer oder Tetracyclododecen/Ethylen-Copolymer mit einem Ethylengehalt von 5 bis 80 Gew.-%, bezogen auf das Gewicht des Copolymeren, ist.

7. Folie nach einem oder mehreren der Ansprüche 1 bis 6, **dadurch gekennzeichnet, daß** das Cycloolefinpolymere der Basisschicht eine Glastemperatur T_{g} zwischen -20°C und 400°C, bevorzugt zwischen 50°C und 200°C und eine Viskositätszahl (Dekalin, 135°C, DIN 53728) zwischen 0,1 und 200 ml/g, bevorzugt zwischen 50 und 150 ml/g aufweist.

8. Folie nach einem oder mehreren der Ansprüche 1 bis 7, **dadurch gekennzeichnet, daß** sich die Glastemperaturen Tg₁ und Tg₂ der Cycloolefinpolymeren COP₁ und COP₂ um mindestens 5 bis 150°C, unterscheiden, wobei Tg₁ < Tg₂ gilt.

9. Folie nach einem oder mehreren der Ansprüche 1 bis 8, **dadurch gekennzeichnet, daß** die Deckschicht mindestens 90-100 Gew.-% Cycloolefinpolymer COP₁ und COP₂ enthält, wobei der Anteil an COP₁ 99,5 bis 75 Gew.-% und der Anteil an COP₂ 0,5 bis 25 Gew.-%, jeweils bezogen auf das Gewicht der Deckschicht, beträgt.

10. Folie nach einem oder mehreren der Ansprüche 1 bis 9, **dadurch gekennzeichnet, daß** das Cycloolefinpolymer COP₁ 0,1 bis 100 Gew.-%, bevorzugt 10 bis 99 Gew.-%, jeweils bezogen auf die Gesamtmasse des Cycloolefinpolymeren, polymerisierte Cycloolefineinheiten der Formeln I, II, III, IV, V oder VI enthält 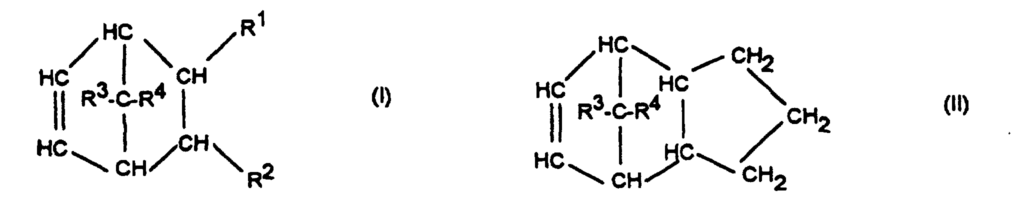 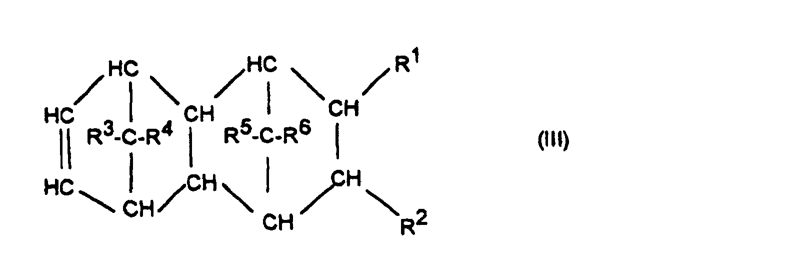 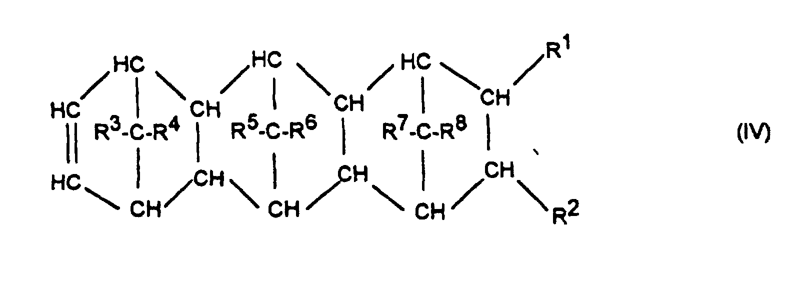 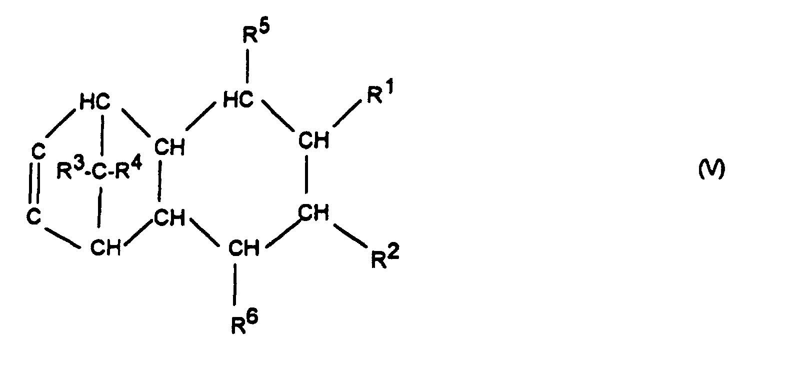 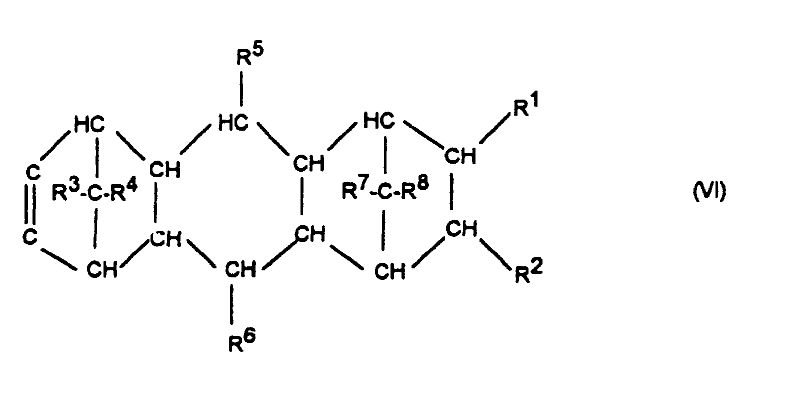 worin R¹, R², R³, R⁴, R⁵, R⁶, R⁷ und R⁸ gleich oder verschieden sind und ein Wasserstoffatom oder einen C₁-C₃₀-Kohlenwasserstoffrest bedeuten oder zwei oder mehrere Reste R¹ bis R⁸ cyclisch verbunden sind, wobei gleiche Reste in den verschiedenen Formeln eine unterschiedliche Bedeutung haben können.

11. Folie nach Anspruch 10, **dadurch gekennzeichnet, daß** das Cycloolefinpolymere COP₁ ein Cycloolefincopolymer ist und bis zu 45 Gew.-%, bezogen auf die Gesamtmasse des Cycloolefincopolymers, polymerisierte Einheiten mindestens eines monocyclischen Olefins der Formel VII enthält: 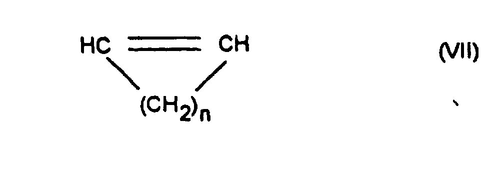 worin n eine Zahl von 2 bis 10 ist,

12. Folie nach Anspruch 10, **dadurch gekennzeichnet, daß** das Cycloolefinpolymere COP₁ ein Cycloolefincopolymer ist und bis zu 99 Gew.-%, bezogen auf die Gesamtmasse des Cycloolefincopolymers, polymerisierte Einheiten eines acyclischen Olefins der Formel VIII enthält: 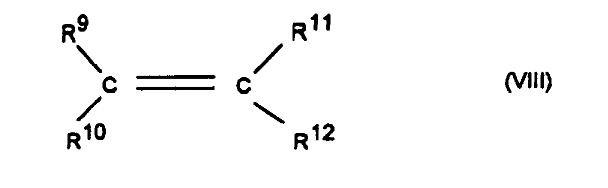 worin R⁹, R¹⁰, R¹¹, R¹² gleich oder verschieden sind und ein Wasserstoffatom oder C₁-C₁₀-Kohlenwasserstoffrest, vorzugsweise einen C₁-C₈-Alkylrest oder C₆-C₁₄-Arylrest bedeuten.

13. Folie nach einem oder mehreren der Ansprüche 1 bis 12, **dadurch gekennzeichnet, daß** das Cycloolefinpolymer COP₂ 0,1 bis 100 Gew.-%, bevorzugt 10 bis 99 Gew.-%, jeweils bezogen auf die Gesamtmasse des Cycloolefinpolymeren, polymerisierte Cycloolefineinheiten der Formeln I, II, III, IV, V oder VI enthält 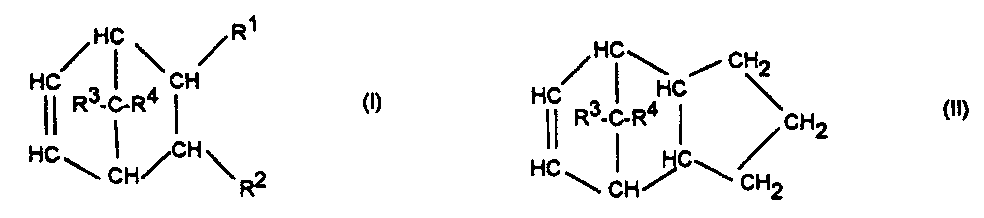 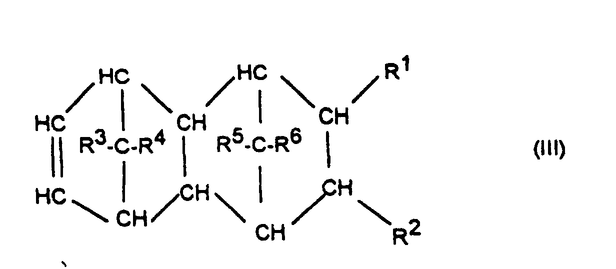 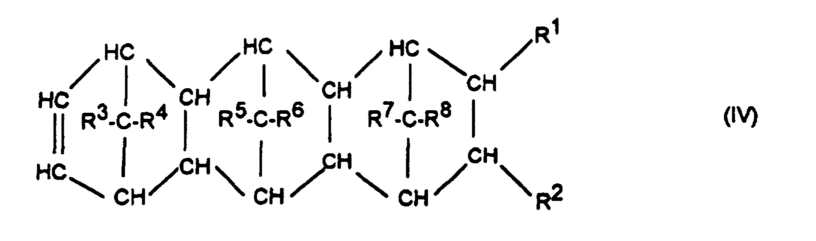 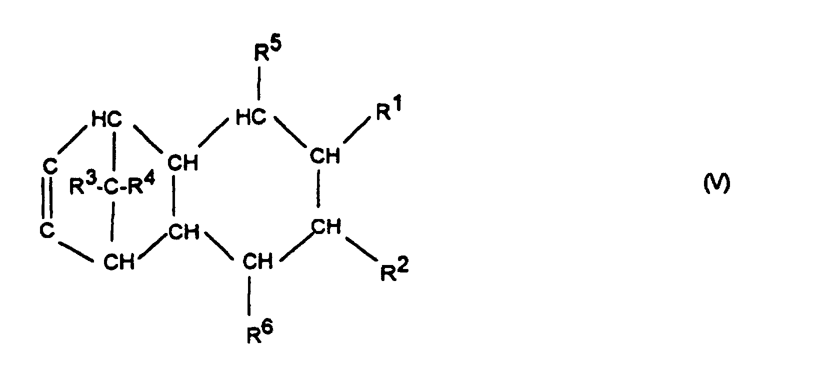 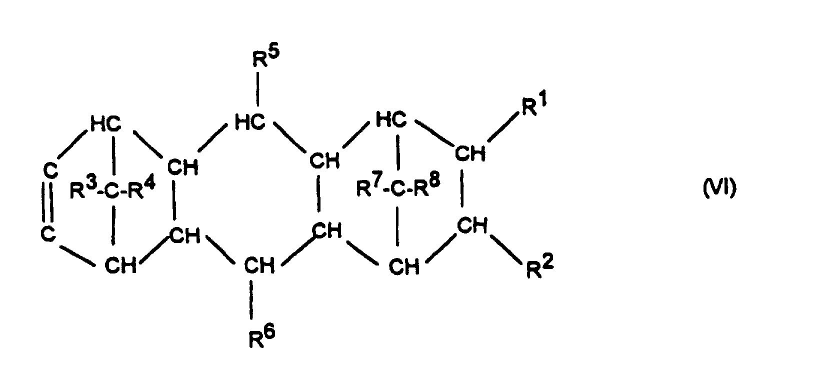 worin R¹, R², R³, R⁴, R⁵, R⁶, R⁷ und R⁸ gleich oder verschieden sind und ein Wasserstoffatom oder einen C₁-C₃₀-Kohlenwasserstoffrest bedeuten oder zwei oder mehrere Reste R¹ bis R⁸ cyclisch verbunden sind, wobei gleiche Reste in den verschiedenen Formeln eine unterschiedliche Bedeutung haben können.

14. Folie nach Anspruch 13, **dadurch gekennzeichnet, daß** das Cycloolefinpolymere COP₂ ein Cycloolefincopolymer ist und bis zu 45 Gew.-%, bezogen auf die Gesamtmasse des Cycloolefincopolymers, polymerisierte Einheiten mindestens eines monocyclischen Olefins der Formel VII enthält: 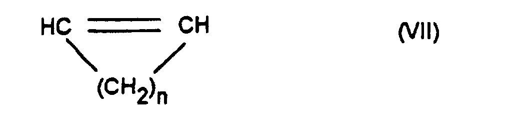 worin n eine Zahl von 2 bis 10 ist,

15. Folie nach Anspruch 13, **dadurch gekennzeichnet, daß** das Cycloolefinpolymere COP₂ ein Cycloolefincopolymer ist und bis zu 99 Gew.-%, bezogen auf die Gesamtmasse des Cycloolefincopolymers, polymerisierte Einheiten eines acyclischen Olefins der Formel VIII enthält: 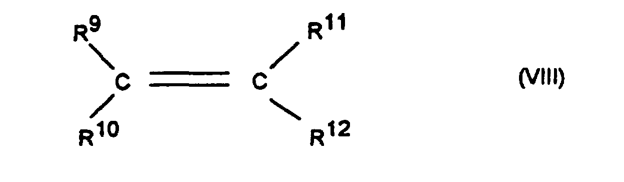 worin R⁹, R¹⁰, R¹¹, R¹² gleich oder verschieden sind und ein Wasserstoffatom oder C₁-C₁₀-Kohlenwasserstoffrest, vorzugsweise einen C₁-C₈-Alkylrest oder C₆-C₁₄-Arylrest bedeuten.

16. Folie nach einem oder mehreren der Ansprüche 1 bis 15, **dadurch gekennzeichnet, daß** die Basisschicht und/oder die Deckschicht Stabilisatoren, Neutralisationsmittel und/oder Antioxidantien enthalten.

17. Folie nach einem oder mehreren der Ansprüche 1 bis 16, **dadurch gekennzeichnet, daß** die Folie eine Gesamtdicke von 2 bis 50 µm aufweist, wobei die Dicke der Deckschicht/en 0,1 bis 5 µm beträgt/betragen.

18. Folie nach einem oder mehreren der Ansprüche 1 bis 17, **dadurch gekennzeichnet, daß** die Folie beidseitig Deckschichten, vorzugsweise gleiche Deckschichten, aufweist.

19. Folie nach einem oder mehreren der Ansprüche 1 bis 18, **dadurch gekennzeichnet, daß** die Deckschicht/en kein partikelförmiges Antiblockmittel enthält/enthalten.

20. Verfahren zur Herstellung der Mehrschichtfolie nach Anspruch 1, bei dem die den einzelnen Schichten der Folie entsprechenden Schmelzen durch eine Flachdüse coextrudiert werden, die coextrudierte Folie über eine Abzugswalze abgezogen wird, die Folie biaxial gestreckt wird mit einem Längsstreckverhältnis von 1,1:1 bis 4:1 und einem Querstreckverhältnis von 2:1 bis 5:1, die biaxial gestreckte Folie thermofixiert, gegebenenfalls corona- oder flammbehandelt und anschließend aufgewickelt wird.

21. Verfahren nach Anspruch 20, **dadurch gekennzeichnet, daß** die Folie bei einer Längsstrecktemperatur Tₗ und bei einer Querstrecktemperatur T_{q} orientiert wird, wobei Tₗ und T_{q} mindestens 5°C über der Tg des Cycloolefinpolymeren COP der Basisschicht liegen und gleichzeitig Tₗ mindestens 3°C unter der Tg₂ des Cycloolefinpolymeren COP₂ der Deckschicht liegt.

22. Verwendung einer Folie nach den Ansprüchen 1 bis 13 zur Herstellung einer metallisierten Folie.

23. Verwendung einer Folie nach den Ansprüchen 1 bis 13 zur Herstellung einer beidseitig metallisierten Folie.

24. Kondensator enthaltend eine Folie nach den Ansprüchen 1 bis 13, 16 oder 17.

## Claims

1. A film having more than one layer and made from cycloolefin polymers and having a base layer and at least one outer layer, the base layer in essence consisting of a cycloolefin polymer COP having a glass transition temperature Tg and the outer layer being built up essentially from a mixture of cycloolefin polymers, wherein the mixture of cycloolefin polymers comprises at least two cycloolefin polymers COP₁ and COP₂ whose glass transition temperatures Tg₁ and Tg₂ differ by at least 5°C, where Tg₂-Tg₁ ≥ 5°C and at the same time the condition Tg₂-Tg ≥ 5°C is fulfilled.

2. A film as claimed in claim 1, wherein the base layer comprises from 90 to 100% by weight of cycloolefin polymer or a cycloolefin polymer mixture and, if desired, customary additives in addition.

3. A film as claimed in one or more of claims 1 and 2, wherein the cycloolefin polymer of the base layer comprises from 0.1 to 100% by weight, preferably from 10 to 99% by weight, based in each case on the total weight of the cycloolefin polymer, of polymerized cycloolefin units of the formulae I, II, III, IV, V or VI: 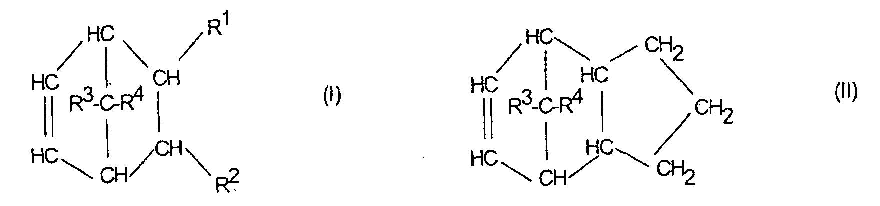 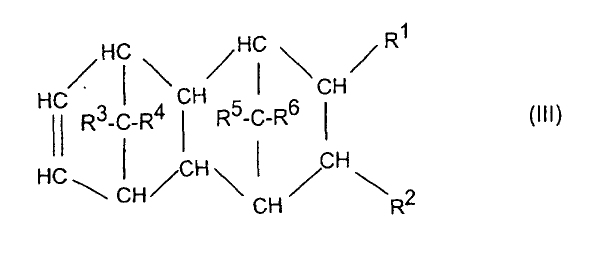 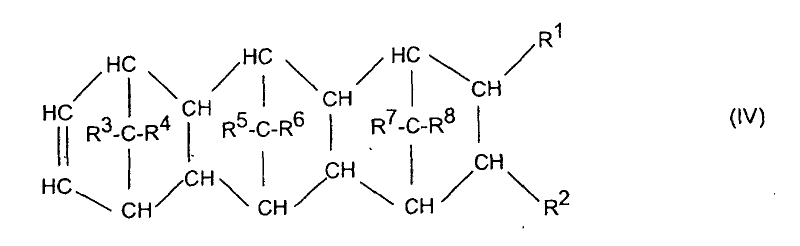 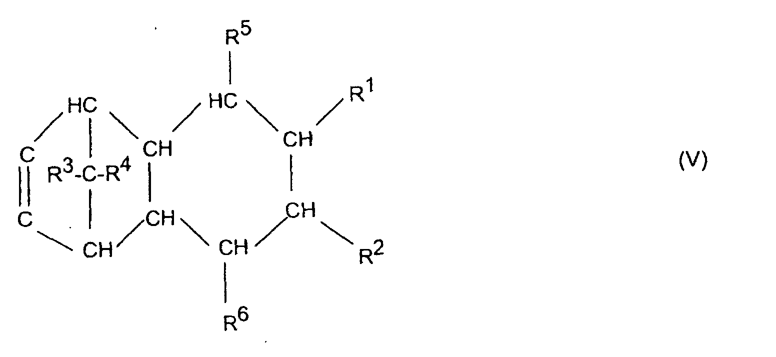 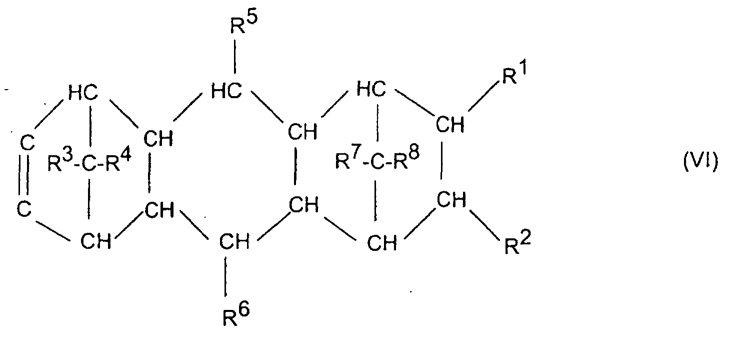 where R¹, R², R³, R⁴, R⁵, R⁶, R⁷ and R⁸ are identical or different and are a hydrogen atom or a C₁-C₃₀-hydrocarbon radical or where two or more radicals R¹ to R⁸ are bonded in a ring, and where the meaning of the same radical may be different in different formulae.

4. A film as claimed in claim 3, wherein the cycloolefin polymer of the base layer is a cycloolefin copolymer and contains up to 45% by weight, based on the total weight of the cycloolefin copolymer, of polymerized units of at least one monocyclic olefin of the formula VII: 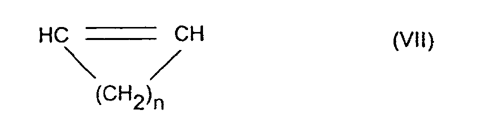 where n is a number from 2 to 10.

5. A film as claimed in claim 3, wherein the cycloolefin polymer of the base layer is a cycloolefin copolymer and contains up to 99% by weight, based on the total weight of the cycloolefin copolymer, of polymerized units of an acyclic olefin of the formula VIII: 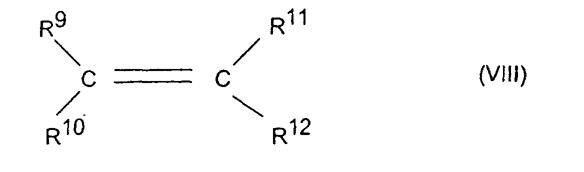 where R⁹, R¹⁰, R¹¹ and R¹² are identical or different and are a hydrogen atom or C₁-C₁₀-hydrocarbon radical, preferably a C₁-C₈-alkyl radical or C₆-C₁₄-aryl radical.

6. A film as claimed in one or more of claims 1 to 5, wherein the cycloolefin polymer of the base layer is a norbornene-ethylene copolymer or tetracyclododecene-ethylene copolymer having an ethylene content of from 5 to 80% by weight, based on the weight of the copolymer.

7. A film as claimed in one or more of claims 1 to 6, wherein the cycloolefin polymer of the base layer has a glass transition temperature T_{g} of from -20°C to 400°C, preferably from 50°C to 200°C, and a viscosity number (decalin, 135°C, DIN 53728) of from 0.1 to 200 ml/g, preferably from 50 to 150 ml/g.

8. A film as claimed in one or more of claims 1 to 7, wherein the glass transition temperatures Tg₁ and Tg₂ of the cycloolefin polymers COP₁ and COP₂ differ by at least from 5 to 150°C, and Tg₁ < Tg₂.

9. A film as claimed in one or more of claims 1 to 8, wherein the outer layer comprises from 90 to 100% by weight of cycloolefin polymers COP₁ and COP₂, the proportion of COP₁ being from 99.5 to 75% by weight and the proportion of COP₂ being from 0.5 to 25% by weight, based in each case on the weight of the outer layer.

10. A film as claimed in one or more of claims 1 to 9, wherein the cycloolefin polymer COP₁ comprises from 0.1 to 100% by weight, preferably from 10 to 99% by weight, based in each case on the total weight of the cycloolefin. polymer, of polymerized cycloolefin units of the formulae I, II, III, IV, V or VI 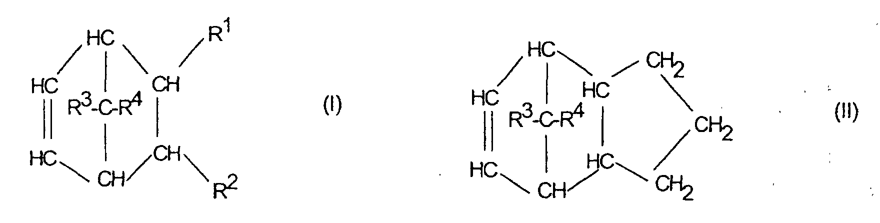 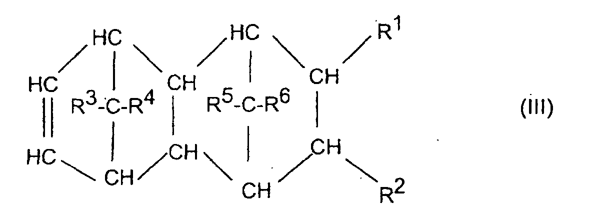 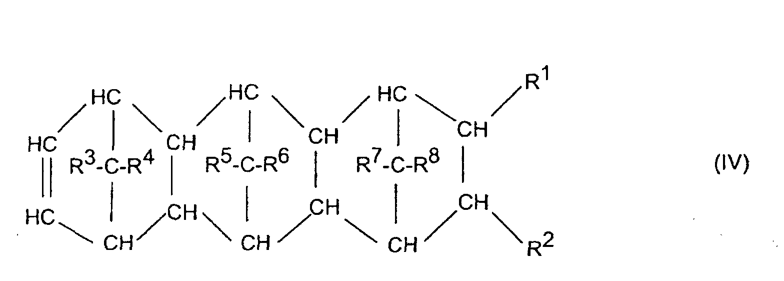 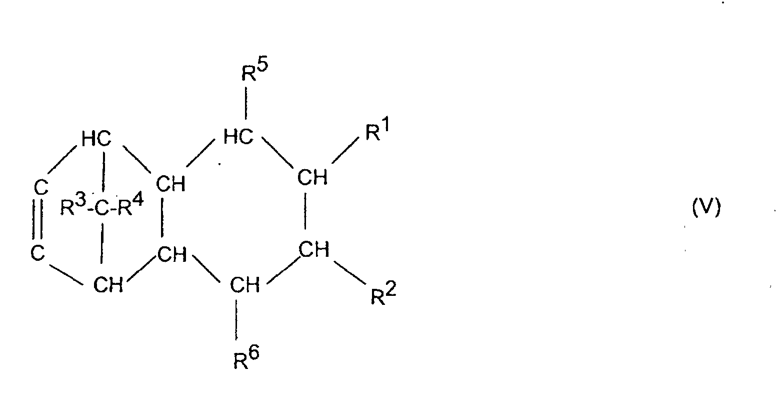 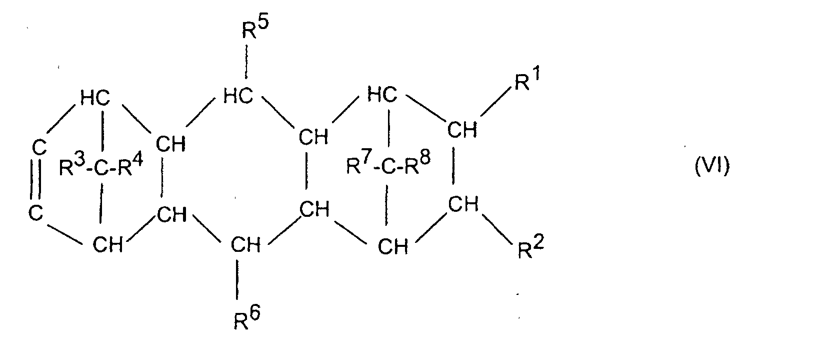 where R¹, R², R³, R⁴, R⁵, R⁶, R⁷ and R⁸ are identical or different and are a hydrogen atom or a C₁-C₃₀-hydrocarbon radical or where two or more radicals R¹ to R⁸ are bonded in a ring, and where the meaning of the same radical may be different in different formulae.

11. A film as claimed in claim 10, wherein the cycloolefin polymer COP₁ is a cycloolefin copolymer and contains up to 45% by weight, based on the total weight of the cycloolefin copolymer, of polymerized units of at least one monocyclic olefin of the formula VII: 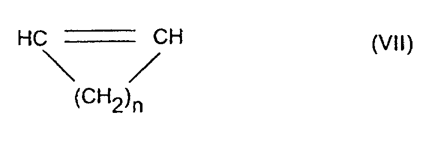 where n is a number from 2 to 10.

12. A film as claimed in claim 10, wherein the cycloolefin polymer COP₁ is a cycloolefin copolymer and contains up to 99% by weight, based on the total weight of the cycloolefin copolymer, of polymerized units of an acyclic olefin of the formula VIII: 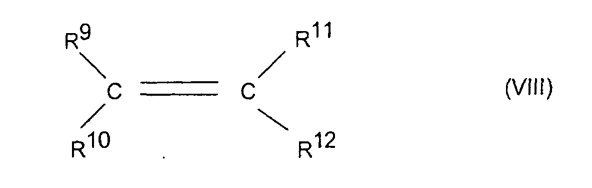 where R⁹, R¹⁰, R¹¹ and R¹² are identical or different and are a hydrogen atom or C₁-C₁₀-hydrocarbon radical, preferably a C₁-C₈-alkyl radical or C₆-C₁₄-aryl radical.

13. A film as claimed in one or more of claims 1 to 12, wherein the cycloolefin polymer COP₂ comprises from 0.1 to 100% by weight, preferably from 10 to 99% by weight, based in each case on the total weight of the cycloolefin polymer, of polymerized cycloolefin units of the formulae I, II, III, IV, V or VI 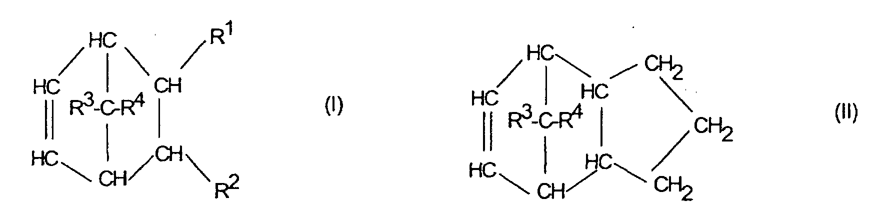 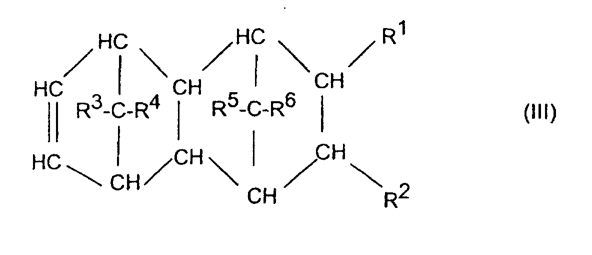 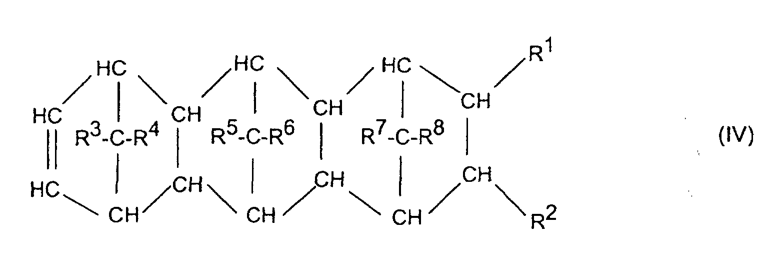 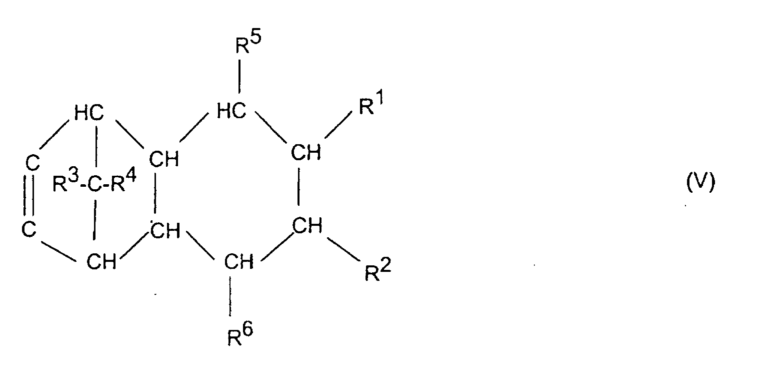 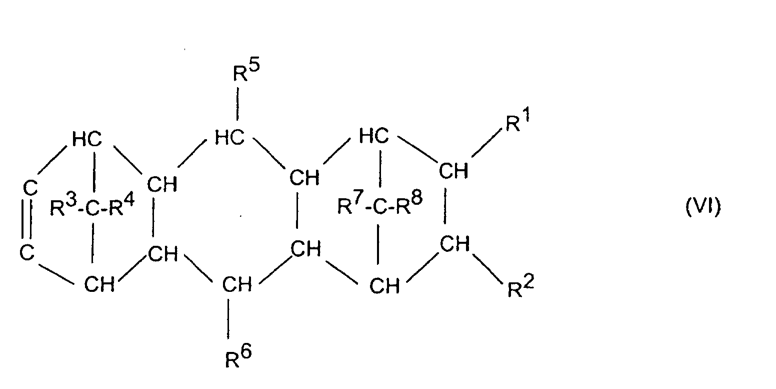 where R¹, R², R³, R⁴, R⁵, R⁶, R⁷ and R⁸ are identical or different and are a hydrogen atom or a C₁-C₃₀-hydrocarbon radical or where two or more radicals R¹ to R⁸ are bonded in a ring, and where the meaning of the same radical may be different in different formulae.

14. A film as claimed in claim 13, wherein the cycloolefin polymer COP₂ is a cycloolefin copolymer and contains up to 45% by weight, based on the total weight of the cycloolefin copolymer, of polymerized units of at least one monocyclic olefin of the formula VII: 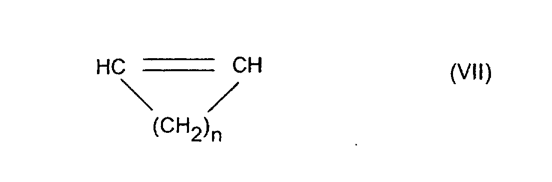 where n is a number from 2 to 10.

15. A film as claimed in claim 13, wherein the cycloolefin polymer COP₂ is a cycloolefin copolymer and contains up to 99% by weight, based on the total weight of the cycloolefin copolymer, of polymerized units of an acyclic olefin of the formula VIII: 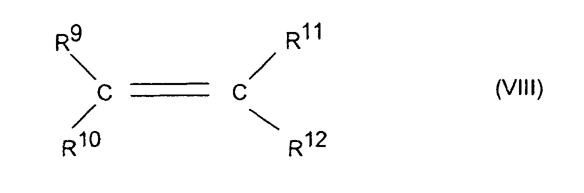 where R⁹, R¹⁰, R¹¹ and R¹² are identical or different and are a hydrogen atom or C₁-C₁₀-hydrocarbon radical, preferably a C₁-C₈-alkyl radical or C₆-C₁₄-aryl radical.

16. A film as claimed in one or more of claims 1 to 15, wherein the base layer and/or the outer layer contain stabilizers, neutralizing agents and/or antioxidants.

17. A film as claimed in one or more of claims 1 to 16, wherein the film has a total thickness of from 2 to 50 µm, the thickness of the outer layer(s) being from 0.1 to 5 µm.

18. A film as claimed in one or more of claims 1 to 17, wherein the film has outer layers on both sides, preferably identical outer layers.

19. A film as claimed in one or more of claims 1 to 18, wherein the outer layer(s) do(es) not contain particulate antiblocking agents.

20. A process for producing a film as claimed in claim 1, which comprises coextruding the melts corresponding to the individual film layers through a flat film die, drawing off the coextruded film over a take-off roll, biaxially stretching the film using a longitudinal stretching ratio of from 1.1:1 to 4:1 and a transverse stretching ratio of from 2:1 to 5:1, heat-setting the biaxially stretched film, if desired corona- or flame-treating the film and then reeling it.

21. The process as claimed in claim 20, wherein the film is oriented at a longitudinal stretching temperature T₁ and at a transverse stretching temperature T_{q}, where T₁ and T_{q} are at least 5°C above Tg of the cycloolefin polymer COP of the base layer and, at the same time, T₁ is at least 3°C below Tg₂ of the cycloolefin polymer COP₂ of the outer layer.

22. The use of a film as claimed in any of claims 1 to 13 for producing a metallized film.

23. The use of a film as claimed in any of claims 1 to 13 for producing a film metallized on both sides.

24. A capacitor containing a film as claimed in any of claims 1 to 13, 16 and 17.

## Revendications

1. Feuille à plusieurs couches en polymère de cyclooléfine comprenant une couche de base et au moins une couche de recouvrement, la couche de base étant essentiellement élaborée à partir d'un polymère de cyclooléfine COP présentant une température de transition vitreuse T_{g} et la couche de recouvrement étant essentiellement élaborée à partir d'un mélange de polymères de cyclooléfine, **caractérisée en ce que** le mélange de polymères de cyclooléfine contient au moins deux polymères de cyclooléfine COP₁ et COP₂ dont les températures de transition vitreuse T_{g1} et T_{g2} diffèrent d'au moins 5°C, avec T_{g2}-T_{g1} ≥ 5°C et la condition T_{g2}-T_{g} ≥ 5°C étant simultanément remplie.

2. Feuille selon la revendication 1, **caractérisée en ce que** la couche de base contient au moins 90 à 100% en poids de polymère de cyclooléfine ou de mélange de polymères de cyclooléfine et le cas échéant d'autres additifs usuels supplémentaires.

3. Feuille selon l'une ou plusieurs des revendications 1 à 2, **caractérisée en ce que** le polymère de cyclooléfine de la couche de base contient 0,1 à 100% en poids, de préférence 10 à 99% en poids, à chaque fois par rapport à la masse totale de polymères de cyclooléfine, d'unités polymérisées de cyclooléfine des formules I, II, III, IV, V ou VI 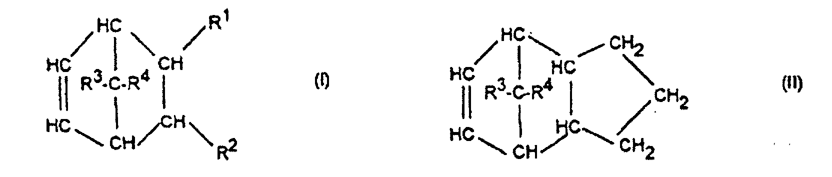 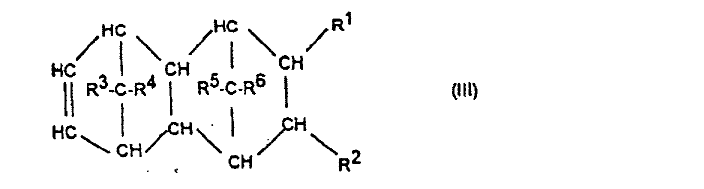 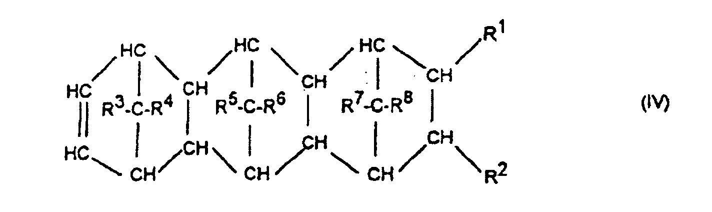 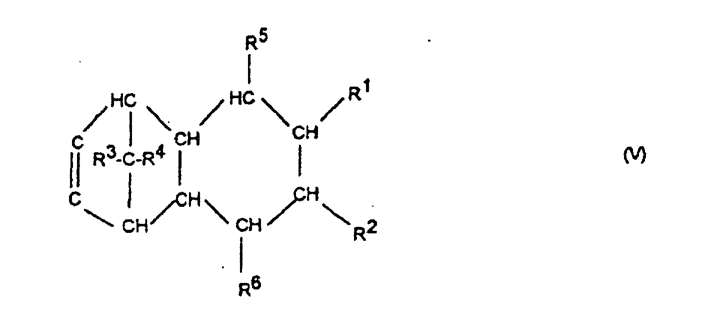 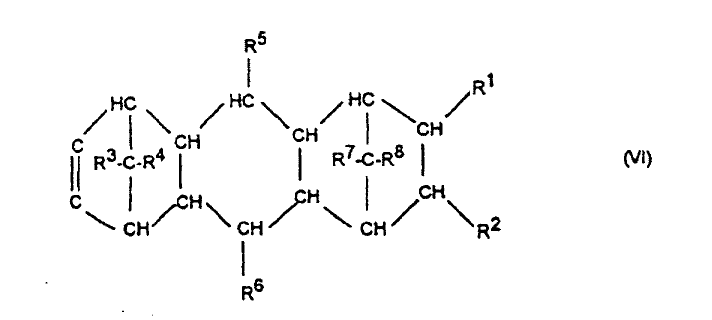 où R¹, R², R³, R⁴, R⁵, R⁶, R⁷ et R⁸ sont identiques
ou différents et signifient un atome d'hydrogène
ou un radical hydrocarboné en C₁ à C₃₀ ou deux radicaux R¹ à R⁸ ou plus sont reliés dans un cycle, des radicaux identiques dans les différentes formules pouvant avoir une signification différente.

4. Feuille selon la revendication 3, **caractérisée en ce que** le polymère de cyclooléfine de la couche de base est un copolymère de cyclooléfine et contient jusqu'à 45% en poids, par rapport à la masse totale du copolymère de cyclooléfine, d'unités polymérisées d'au moins une oléfine monocyclique de formule VII : 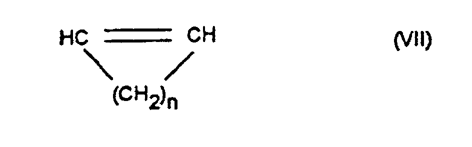 où n vaut un nombre de 2 à 10.

5. Feuille selon la revendication 3, **caractérisée en ce que** le polymère de cyclooléfine de la couche de base est un copolymère de cyclooléfine et contient jusqu'à 99% en poids, par rapport à la masse totale du copolymère de cyclooléfine, d'unités polymérisées d'une oléfine acyclique de formule VIII : 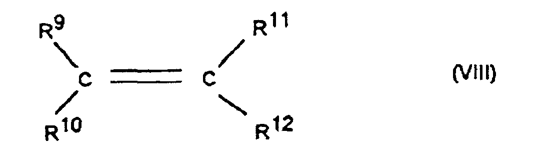 où R⁹, R¹⁰, R¹¹, R¹² sont identiques ou différents et signifient un atome d'hydrogène ou un radical hydrocarboné en C₁ à C₁₀, de préférence un radical alkyle en C₁ à C₈ ou un radical aryle en C₆ à C₁₄.

6. Feuille selon l'une ou plusieurs des revendications 1 à 5, **caractérisée en ce que** le polymère de cyclooléfine de la couche de base est un copolymère de norbornène/éthylène ou un copolymère de tétracyclododécène/éthylène avec une teneur en éthylène de 5 à 80% en poids, par rapport au poids du copolymère.

7. Feuille selon l'une ou plusieurs des revendications 1 à 6, **caractérisée en ce que** le polymère de cyclooléfine de la couche de base présente une température de transition vitreuse T_{g} entre -20°C et 400°C, de préférence entre 50°C et 200°C et un indice de viscosité (Décaline, 135°C, DIN 53728) entre 0,1 et 200 ml/g, de préférence entre 50 et 150 ml/g.

8. Feuille selon l'une ou plusieurs des revendications 1 à 7, **caractérisée en ce que** les températures de transition vitreuse T_{g1} et T_{g2} des polymères de cyclooléfine COP₁ et COP₂ diffèrent d'au moins 5 à 150°C, avec T_{g1} étant < T_{g2}.

9. Feuille selon l'une ou plusieurs des revendications 1 à 8, **caractérisée en ce que** la couche de recouvrement contient au moins 90 à 100% en poids de copolymère de cyclooléfine COP₁ et COP₂, la proportion de COP₁ étant de 99,5 à 75% en poids et la proportion de COP₂ de 0,5 à 25% en poids, à chaque fois par rapport au poids de la couche de recouvrement.

10. Feuille selon l'une ou plusieurs des revendications 1 à 9, **caractérisée en ce que** le polymère de cyclooléfine COP₁ contient 0,1 à 100% en poids, de préférence 10 à 99% en poids, à chaque fois par rapport à la masse totale du polymère de cyclooléfine, d'unités polymérisées de cyclooléfine des formules I, II, III, IV, V ou VI 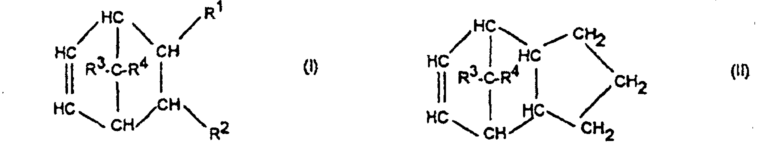 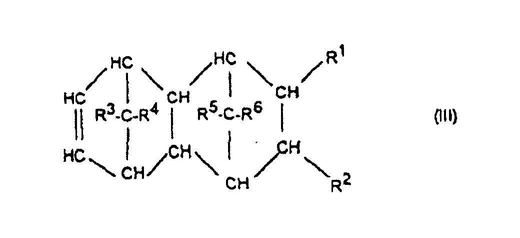 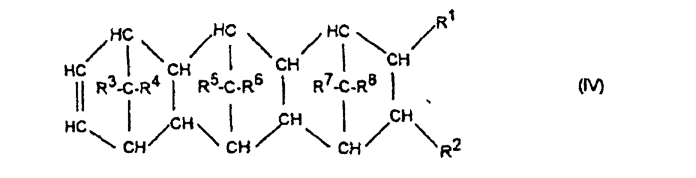 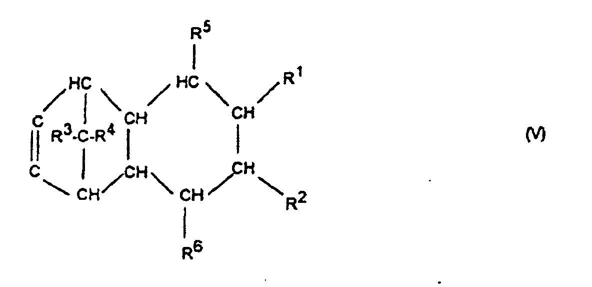 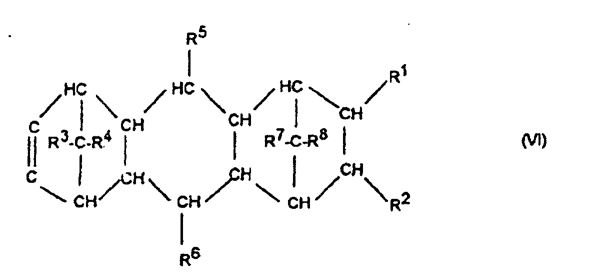 où R¹, R², R³, R⁴, R⁵, R⁶, R⁷ et R⁸ sont identiques ou différents et signifient un atome d'hydrogène ou un radical hydrocarboné en C₁ à C₃₀, ou deux radicaux R¹ à R⁸ ou plus sont reliés dans un cycle, les mêmes radicaux dans les différentes formules pouvant avoir une signification différente.

11. Feuille selon la revendication 10, **caractérisée en ce que** le polymère de cyclooléfine COP₁ est un copolymère de cyclooléfine et contient jusqu'à 45% en poids, par rapport à la masse totale du copolymère de cyclooléfine, d'unités polymérisées d'au moins une oléfine monocyclique de formule VII : 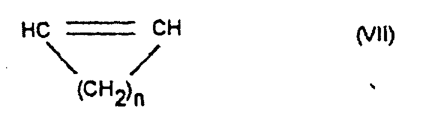 où n vaut un nombre de 2 à 10.

12. Feuille selon la revendication 10, **caractérisée en ce que** le polymère de cyclooléfine COP₁ est un copolymère de cyclooléfine et contient jusqu'à 99% en poids, par rapport à la masse totale du copolymère de cyclooléfine, d'unités polymérisées d'une oléfine acyclique de formule VIII : 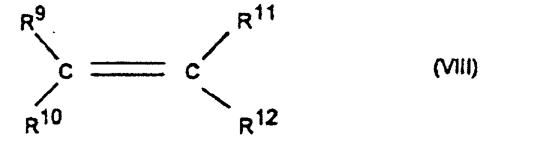 où R⁹, R¹⁰, R¹¹, R¹² sont identiques ou différents et signifient un atome d'hydrogène ou un radical hydrocarboné en C₁ à C₁₀, de préférence un radical alkyle en C₁ à C₈ ou un radical aryle en C₆ à C₁₄.

13. Feuille selon l'une ou plusieurs des revendications 1 à 12, **caractérisée en ce que** le polymère de cyclooléfine COP₂ contient 0,1 à 100% en poids, de préférence 10 à 99% en poids, à chaque fois par rapport à la masse totale du polymère de cyclooléfine, d'unités polymérisées de cyclooléfine des formules I, II, III, IV, V ou VI 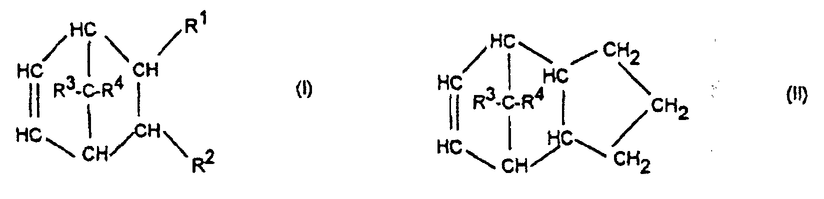 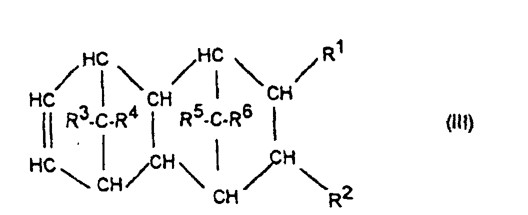 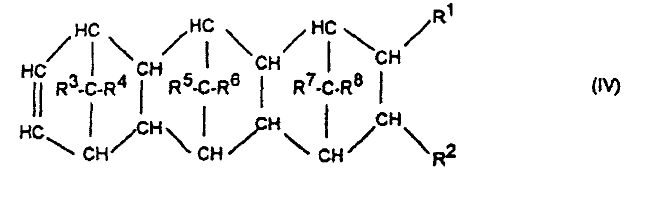 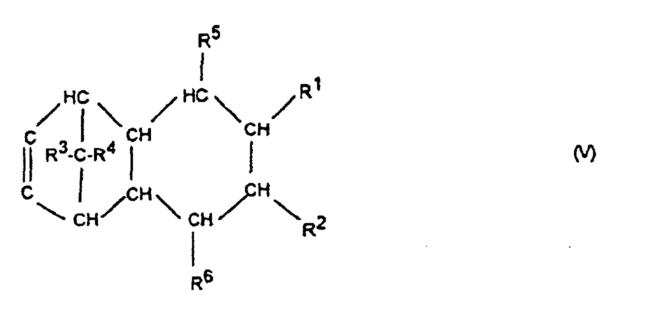 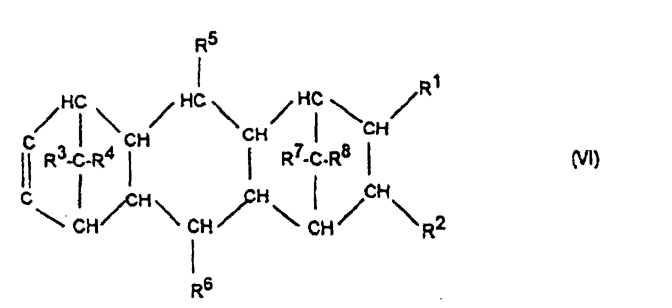 où R¹, R², R³, R⁴, R⁵, R⁶, R⁷ et R⁸ sont identiques ou différents et signifient un atome d'hydrogène ou un radical hydrocarboné en C₁ à C₃₀, ou deux radicaux R¹ à R⁸ ou plus sont reliés dans un cycle, les mêmes radicaux dans les différentes formules pouvant avoir une signification différente

14. Feuille selon la revendication 13, **caractérisée en ce que** le polymère de cyclooléfine COP₂ est un copolymère de cyclooléfine et contient jusqu'à 45% en poids, par rapport à la masse totale du copolymère de cyclooléfine, d'unités polymérisées d'au moins une oléfine monocyclique de formule VII : 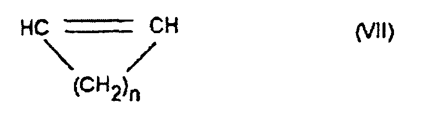 où n vaut un nombre de 2 à 10.

15. Feuille selon la revendication 13, **caractérisée en ce que** le polymère de cyclooléfine COP₂ est un copolymère de cyclooléfine et contient jusqu'à 99% en poids, par rapport à la masse totale du copolymère de cyclooléfine, d'unités polymérisées d'une oléfine acyclique de formule VIII : 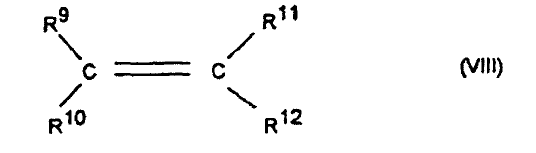 où R⁹, R¹⁰, R¹¹, R¹² sont identiques ou différents et signifient un atome d'hydrogène ou un radical hydrocarboné en C₁ à C₁₀, de préférence un radical alkyle en C₁ à C₈ ou un radical aryle en C₆ à C₁₄.

16. Feuille selon l'une ou plusieurs des revendications 1 à 15, **caractérisée en ce que** la couche de base et/ou la couche de recouvrement contient des agents de stabilisation, de neutralisation et/ou des anti-oxydants.

17. Feuille selon l'une ou plusieurs des revendications 1 à 16, **caractérisée en ce que** la feuille présente une épaisseur totale de 2 à 50 µm, l'épaisseur de la ou des couches de recouvrement étant de 0,1 à 5 µm.

18. Feuille selon l'une ou plusieurs des revendications 1 à 17, **caractérisée en ce que** la feuille présente sur les deux faces des couches de recouvrement, de préférence des couches de recouvrement identiques.

19. Feuille selon l'une ou plusieurs des revendications 1 à 18, **caractérisée en ce que** la ou les couches de recouvrement ne contiennent pas d'agent anti-adhésif sous forme de particules.

20. Procédé pour la préparation de la feuille à plusieurs couches selon la revendication 1, dans lequel les masses fondues correspondant aux différentes couches de la feuille sont coextrudées via une filière plate, la feuille coextrudée est retirée via un cylindre de traction, la feuille est étirée biaxialement avec un rapport d'étirement longitudinal de 1,1:1 à 4:1 et un rapport d'étirement transversal de 2:1 à 5:1, la feuille étirée biaxialement est thermofixée, le cas échéant traitée au corona ou à la flamme et ensuite enroulée.

21. Procédé selon la revendication 20, **caractérisé en ce que** la feuille est orientée à une température d'étirement longitudinal T₁ et à une température d'étirement transversal T_{q}, T₁ et T_{q} étant supérieures d'au moins 5°C à la T_{g} du polymère de cyclooléfine COP de la couche de base et T₁ étant simultanément inférieure d'au moins 3°C à la Tg₂ du polymère de cyclooléfine COP₂ de la couche de recouvrement.

22. Utilisation d'une feuille selon les revendications 1 à 13 pour la préparation d'une feuille métallisée.

23. Utilisation d'une feuille selon les revendications 1 à 13 pour la préparation d'une feuille métallisée sur les deux faces.

24. Condensateur contenant une feuille selon les revendications 1 à 13, 16 ou 17.
